# EUROPEAN PATENT APPLICATION

(11) **EP 4 700 628 A1**
(43) Date of publication of application: **25.02.2026**
(21) Application number: 24825480.7
(22) Date of filing: 17.01.2024
(51) Int. Cl.: G06F 21/62, G06F 3/06

(54) **INFORMATION PROCESSING SYSTEM**

(30) Priority: 20.06.2023 JP 2023100949
(71) Applicant: Panasonic Intellectual Property Management Co., Ltd., Kadoma-shi, Osaka 571-0057 (JP)
(72) Inventor: TAKAHASHI, Katsunao, Kadoma-shi, Osaka 571-0057 (JP); KITAMIKADO, Masanori, Kadoma-shi, Osaka 571-0057 (JP)
(74) Representative: Grünecker Patent- und Rechtsanwälte PartG mbB
(86) International application number: PCT/JP2024/001144
(87) International publication number: WO 2024/262068

(57) **Abstract**

In a case where a first encryption key is stored in a nonvolatile memory (23), an erasure controller (14) generates first sample data by compressing data read from a designated position in a storage area. The erasure controller (14) controls a storage device (13) to change the first encryption key stored in the nonvolatile memory (23) to a second encryption key. In a case where the second encryption key is stored in the nonvolatile memory (23), the erasure controller (14) generates second sample data by compressing data read from the designated position in the storage area. In a case where the second sample data is different from the first sample data, the erasure controller (14) outputs a verification result indicating that the data stored in the storage device (13) has been successfully erased; or otherwise, the erasure controller (14) outputs a verification result indicating that erasure of the data stored in the storage device (13) has failed.

## Description

### TECHNICAL FIELD

The present disclosure relates to an information processing apparatus, an information processing method, an information processing system, and a program.

### BACKGROUND ART

In order to prevent leakage of confidential data when discarding an information processing apparatus, such as a personal computer, it is required to erase data stored in a storage device (or equivalently, make data inaccessible) and verify that the data has been reliably erased. For example, Patent Document 1 and Non-Patent Document 1 disclose how to verify data erasure.

### CITATION LIST

### PATENT DOCUMENTS

PATENT DOCUMENT 1: Japanese Patent No. JP 7096829 B2

### NON-PATENT DOCUMENTS

NON-PATENT DOCUMENT 1: Richard Kissel et al., "Guidelines for Media Sanitization", NIST Special Publication 800-88, Revision 1, National Institute of Standards and Technology, December 2014 [retrieved on December 1, 2022], Internet <URL: http://dx.doi.org/10.6028/NIST.SP.800-88r1>

### SUMMARY OF INVENTION

### TECHNICAL PROBLEM

Conventionally, in order to verify whether or not data has been successfully erased, current data stored in a storage device after the erasure (for example, pattern data or random data overwritten on original data) is compared with the original data stored in the storage device before the erasure. In this case, a large load is applied to an information processing apparatus in order to compare a large amount of data. Therefore, it is required to verify whether or not data has been successfully erased, with a smaller load than the prior art.

The present disclosure provides an information processing apparatus, an information processing method, an information processing system, and a program capable of verifying whether or not data stored in a storage device has been successfully erased, with a smaller load than the prior art.

### SOLUTION TO PROBLEM

According to one aspect of the present disclosure, an information processing apparatus is provided with: a storage device having a self-encrypting function of data to be stored; and an erasure controller that controls erasure of data stored in the storage device. The storage device is provided with: a storage medium having a storage area; a nonvolatile memory storing an encryption key; an input/output controller. The input/output controller writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory, the erasure controller generates first sample data by compressing data read from a designated position in the storage area. The erasure controller controls the storage device to change the first encryption key stored in the nonvolatile memory to a second encryption key. In a case where the second encryption key is stored in the nonvolatile memory, the erasure controller generates second sample data by compressing data read from the designated position in the storage area. In a case where the second sample data is different from the first sample data, the erasure controller outputs a verification result indicating that the data stored in the storage device has been successfully erased. In a case where the second sample data is identical to the first sample data, the erasure controller outputs a verification result indicating that erasure of the data stored in the storage device has failed.

### ADVANTAGEOUS EFFECTS OF INVENTION

According to the information processing apparatus of one aspect of the present disclosure, it is possible to verify whether or not the data stored in the storage device has been successfully erased, with a smaller load than the prior art.

### BRIEF DESCRIPTION OF DRAWINGS

Fig. 1 is a block diagram showing a configuration of an information processing apparatus 1 according to a first embodiment.
Fig. 2 is a block diagram showing a configuration of a storage device 13 of Fig. 1.
Fig. 3 is a schematic diagram showing logical blocks 31 of a flash memory 24 of Fig. 2, the diagram showing an exemplary arrangement of the logical blocks 31 to be compared for verifying data erasure.
Fig. 4 is a flowchart showing an erasure process according to a comparison example 1.
Fig. 5 is a flowchart showing an erasure process according to a comparison example 2.
Fig. 6 is a flowchart showing an erasure process according to an implementation example 1, executed by an erasure controller 14 of Fig. 1.
Fig. 7 is a schematic diagram showing the logical blocks 31 of the flash memory 24 of Fig. 2, the diagram showing a first modification of an arrangement of the logical blocks 31 to be compared for verifying data erasure.
Fig. 8 is a schematic diagram showing the logical blocks 31 of the flash memory 24 of Fig. 2, the diagram showing a second modification of an arrangement of the logical blocks 31 to be compared for verifying data erasure.
Fig. 9 is a flowchart showing an erasure process according to an implementation example 2, executed by the erasure controller 14 of Fig. 1.
Fig. 10 is a flowchart showing an erasure process according to an implementation example 3, executed by the erasure controller 14 of Fig. 1.
Fig. 11 is a flowchart showing an erasure process according to an implementation example 4, executed by the erasure controller 14 of Fig. 1.
Fig. 12 is a flowchart showing an erasure process according to an implementation example 5, executed by the erasure controller 14 of Fig. 1.
Fig. 13 is a flowchart showing an erasure process according to an implementation example 6, executed by the erasure controller 14 of Fig. 1.
Fig. 14 is a flowchart showing an erasure process according to an implementation example 7, executed by the erasure controller 14 of Fig. 1.
Fig. 15 is a flowchart showing an erasure process according to an implementation example 8, executed by the erasure controller 14 of Fig. 1.
Fig. 16 is a block diagram showing a configuration of an information processing apparatus 1A according to a modification of the first embodiment.
Fig. 17 is a flowchart showing an erasure process according to an implementation example 9, executed by an erasure controller 14 of Fig. 61.
Fig. 18 is a flowchart showing an erasure process executed by the information processing apparatus 1 according to a second embodiment.
Fig. 19 is a flowchart showing a subroutine of a preprocess (step S101) of Fig. 18.
Fig. 20 is a flowchart showing a subroutine of a key change process (step S102) of Fig. 18.
Fig. 21 is a flowchart showing a subroutine of a verification process (step S103) of Fig. 18.
Fig. 22 is a diagram showing an exemplary image showing the progress of data erasure, which is displayed on a display device 18 of Fig. 1 by executing the erasure process of Fig. 18.
Fig. 23 is a diagram showing another exemplary image showing the progress of data erasure, which is displayed on the display device 18 of Fig. 1 by executing the erasure process of Fig. 18.
Fig. 24 is a flowchart showing a first modification of the verification process of Fig. 18.
Fig. 25 is a flowchart showing a second modification of the verification process of Fig. 18.
Fig. 26 is a flowchart showing a third modification of the verification process of Fig. 18.
Fig. 27 is a block diagram showing a configuration of an information processing system according to a third embodiment, including the information processing apparatus 1 and a server apparatus.
Fig. 28 is a block diagram showing a configuration of the server apparatus 2 of Fig. 27.
Fig. 29 is a flowchart showing an erasure process executed by the server apparatus 2 of Fig. 27.
Fig. 30 is a flowchart showing an erasure process executed by the information processing apparatus 1 of Fig. 27.
Fig. 31 is a flowchart showing a modification of the erasure process executed by the server apparatus 2 of Fig. 27.
Fig. 32 is a flowchart showing a modification of the erasure process executed by the information processing apparatus 1 of Fig. 27.
Fig. 33 is a flowchart showing a subroutine of a preprocess (step S231) of Fig. 32.
Fig. 34 is a flowchart showing a subroutine of a key change process (step S232) of Fig. 32.
Fig. 35 is a flowchart showing a subroutine of a verification process (step S233) of Fig. 32.

### DESCRIPTION OF EMBODIMENTS

Hereinafter, embodiments will be described in detail with reference to the drawings as appropriate. However, excessively detailed explanation may be omitted. For example, detailed explanation of well-known matters may be omitted, and redundant explanations on substantially the same configuration may be omitted. This is to avoid the unnecessary redundancy of the following description, and to facilitate understanding by those skilled in the art.

It is to be noted that the inventor(s) intends to provide the accompanying drawings and the following description so that those skilled in the art can sufficiently understand the present disclosure, and does not intend to limit subject matters recited in the claims.

### [FIRST EMBODIMENT]

### [CONFIGURATION OF FIRST EMBODIMENT]

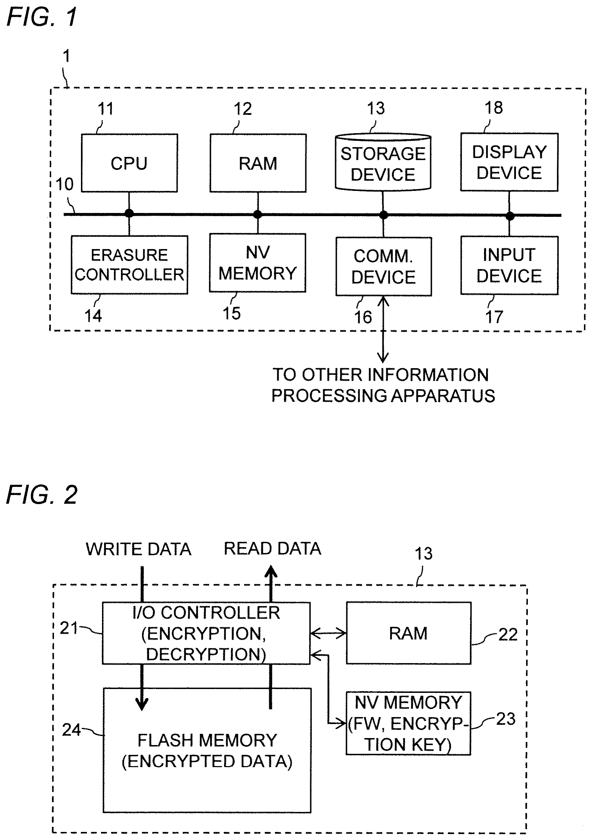

Fig. 1 is a block diagram showing a configuration of an information processing apparatus 1 according to a first embodiment. The information processing apparatus 1 is provided with a bus 10, a central processing unit (CPU) 11, a random access memory (RAM) 12, a storage device 13, an erasure controller 14, a nonvolatile (NV) memory 15, a communication (COMM.) device 16, an input device 17, and a display device 18.

The CPU 11 controls entire operations of the information processing apparatus 1.

The RAM 12 temporarily stores programs and data necessary for the operations of the information processing apparatus 1.

The storage device 13 stores data including an operating system, application programs, and user data. The storage device 13 is a self-encrypting drive (SED) with a self-encrypting function for data to be stored, and is, for example, a solid state drive (SSD) with the self-encrypting function.

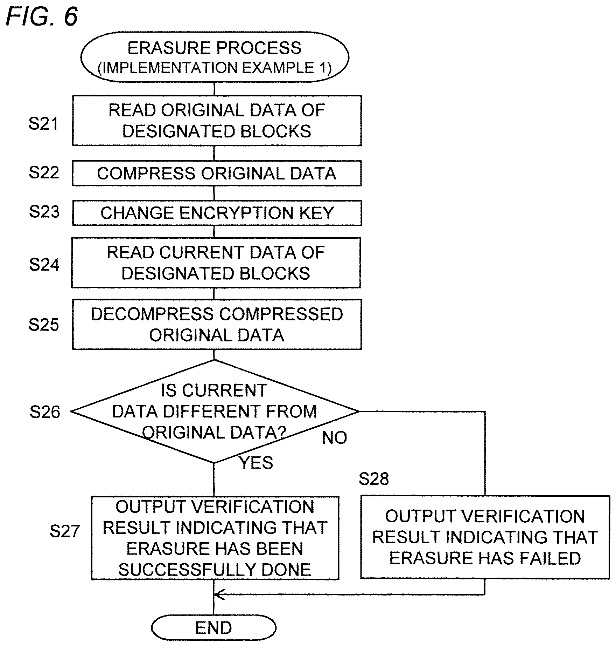

The erasure controller 14 controls erasure of data stored in the storage device 13 by executing an erasure process to be described later with reference to Fig. 6 and others. In the present disclosure, "erasure" means making at least some data stored in the storage device 13 inaccessible. The erasure controller 14 includes, for example, a microprocessor.

The nonvolatile memory 15 stores a program and data necessary for execution of the erasure process. The nonvolatile memory 15 includes, for example, a nonvolatile storage medium, such as a flash memory.

The program for the erasure process may be incorporated in a firmware program of the information processing apparatus 1, such as a unified extensible firmware interface (UEFI) program or a basic input/output system (BIOS) program. In this case, the program for the erasure process may be stored in the same storage medium as that of the UEFI or BIOS program, and may be executed by the same microprocessor as that of the UEFI or BIOS program.

The communication device 16 is communicably connected to other external information processing apparatuses via a communication line, such as a local area network (LAN).

The input device 17 receives user inputs for controlling the operations of the information processing apparatus 1. The input device 17 includes, for example, a keyboard and a pointing device.

The display device 18 displays information related to the status of the information processing apparatus 1, for example, information related to erasure of data stored in the storage device 13.

The CPU 11, the RAM 12, the storage device 13, the erasure controller 14, the nonvolatile memory 15, the communication device 16, the input device 17, and the display device 18 are connected to each other via the bus 10.

The information processing apparatus 1 is, for example, a personal computer.

Fig. 2 is a block diagram showing a configuration of the storage device 13 of Fig. 1. The storage device 13 is provided with an input/output (I/O) controller 21, a random access memory (RAM) 22, a nonvolatile memory 23, and a flash memory 24. The input/output controller 21 controls writing and reading of data to and from the storage device 13. The RAM 22 is a buffer memory that temporarily stores data to be written to the storage device 13, and data read from the storage device 13. The nonvolatile memory 23 stores a firmware program (FW) of the storage device 13, and an encryption key. The flash memory 24 is a nonvolatile storage medium having a storage area. The input/output controller 21 controls operations of the storage device 13 by executing the firmware program stored in the nonvolatile memory 23. The input/output controller 21 writes input data to the storage area of the flash memory 24, and outputs data read from the storage area.

As described above, the storage device 13 has the self-encrypting function. The storage device 13 may encrypt and decrypt data stored in the entire storage area of the flash memory 24, or may encrypt and decrypt data stored in only a part of the storage area. The input/output controller 21 encrypts at least a part of data to be written in the storage area of the flash memory 24, using the encryption key stored in the nonvolatile memory 23. In addition, the input/output controller 21 decrypts at least a part of the data read from the storage area of the flash memory 24, using the encryption key. The input/output controller 21 may use hardware, software, or a combination thereof for encrypting and decrypting data.

With the storage device 13, the information processing apparatus 1 can encrypt and decrypt data stored in the storage device 13, without using the operating system and the application programs.

In the storage device 13 having the self-encrypting function, when the encryption key has been changed, data encrypted using the encryption key before the change and stored in the storage area of the flash memory 24 can not be decrypted using the encryption key after the change. Therefore, by changing the encryption key of the storage device 13, the original data stored in the storage device 13 becomes inaccessible, and equivalently, the original data stored in the storage device 13 can be erased (cryptographic erasure). The input/output controller 21 changes the encryption key stored in the nonvolatile memory 23, under the control of the erasure controller 14. The encryption key may be changed, for example, by the input/output controller 21 executing a REVERT command included in the firmware of the storage device 13.

In a case where data stored in only a partial area of the storage area is encrypted and decrypted as described above, data not encrypted and decrypted does not become inaccessible even when the encryption key is changed, and thus, it is not erased. In order to verify whether or not data has been successfully erased, the erasure controller 14 compares the current data stored in the storage device 13 after changing the encryption key, with the original data stored in the storage device 13 before changing the encryption key. In a case where the current data is different from the original data, the erasure controller 14 determines that the data has been successfully erased, and in a case where the current data is identical to the original data, the erasure controller 14 determines that the data erasure has failed.

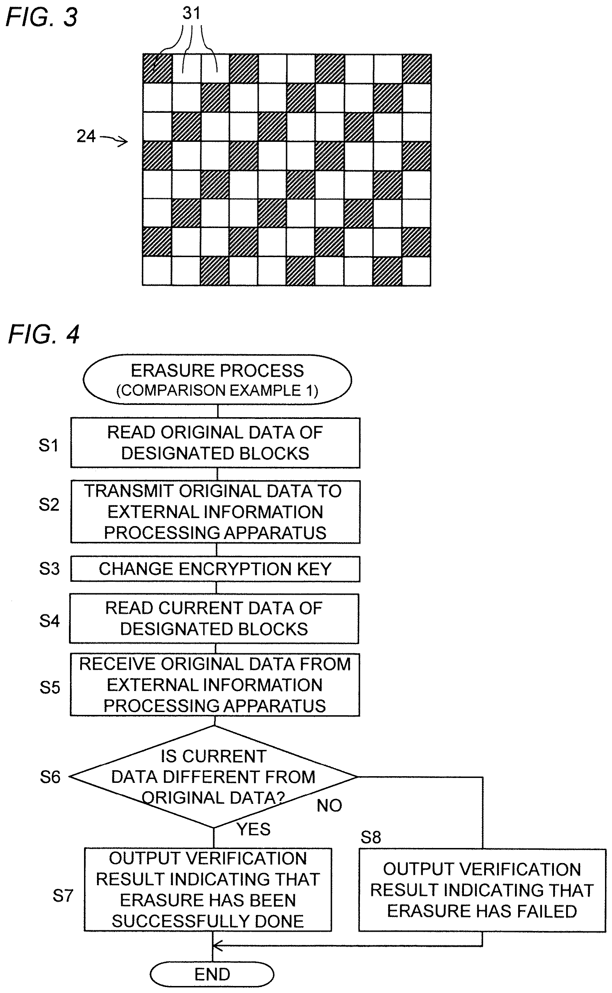

Fig. 3 is a schematic diagram showing logical blocks 31 of the flash memory 24 of Fig. 2, the diagram showing an exemplary arrangement of the logical blocks 31 to be compared for verifying data erasure. The storage area of the flash memory 24 includes a plurality of logical blocks 31. Each logical block 31 is a partial area logically divided from the storage area. For example, a storage area of 1 TB may be divided into 10000 logical blocks 31, each having a size of 100 MB. In order to verify whether or not data has been successfully erased, the erasure controller 14 may compare the data before and after the change of the encryption key, over the entire storage area, or over a part of the storage area (for example, 1000 logical blocks 31 corresponding to 10 % of the entire storage area). In the latter case, the logical blocks 31 to be compared may be designated according to a predetermined rule (for example, hatched logical blocks 31 in Fig. 3), or may be designated randomly.

Although Fig. 3 and others show the storage area of the flash memory 24 in a two-dimensional manner, the storage area may be considered as a continuous and sequential memory space.

### [COMPARISON EXAMPLE]

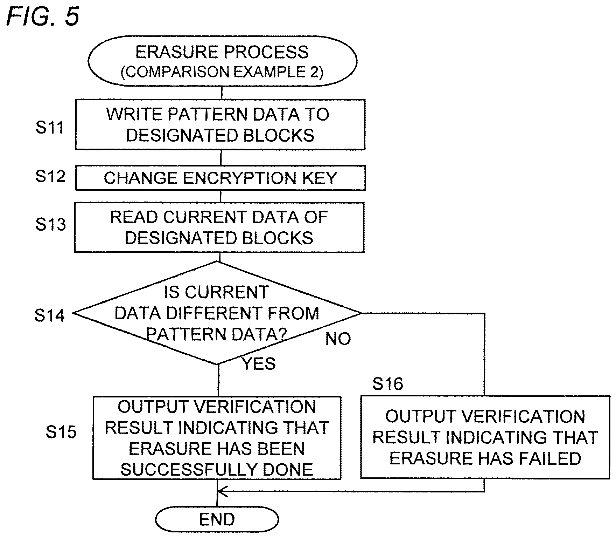

Now, with reference to Figs. 4 and 5, we will describe verification of data erasure according to the prior art. For description, it is assumed the case where the information processing apparatus 1 of Fig. 1 executes erasure processes shown in Figs. 4 and 5.

Fig. 4 is a flowchart showing an erasure process according to a comparison example 1. Fig. 4 shows a method for verifying data erasure as disclosed in Non-Patent Document 1.

The erasure process of Fig. 4 or others is started, for example, when erasure of data stored in the storage device 13 is instructed via the BIOS or UEFI program.

In step S1, the erasure controller 14 reads the original data of the logical blocks 31, for example, the logical blocks 31 being designated as shown in Fig. 3. Here, the "original data" indicates data read from the designated logical blocks 31 in the storage area, in a case where the encryption key before the change is stored in the nonvolatile memory 23. In a case where the logical blocks 31 are to be encrypted and decrypted, the erasure controller 14 obtains data decrypted using the encryption key before the change. On the other hand, in a case where the logical blocks 31 are not to be encrypted and decrypted, the erasure controller 14 just obtains data read from the logical blocks 31 without decryption. In general, for example, in a case where the RAM 12 has a size of several GB to several tens of GB, the storage device 13 has a storage area of 1 TB, and data in 10 % of the storage area, that is, 100 GB data is to be read, all the data cannot be stored in the RAM 12. Therefore, in step S2, the erasure controller 14 transmits the original data to an external information processing apparatus in order to temporarily save the original data.

In step S3, the erasure controller 14 changes the encryption key stored in the nonvolatile memory 23. In the present description, the encryption key before the change is also referred to as a "first encryption key", and the encryption key after the change is also referred to as a "second encryption key".

In step S4, the erasure controller 14 reads the current data of the same designated logical blocks 31 as those of step S1. Here, the "current data" indicates data read from the designated logical blocks 31 in the storage area, in a case where the encryption key after the change is stored in the nonvolatile memory 23. In a case where the logical blocks 31 are to be encrypted and decrypted, the erasure controller 14 obtains data decrypted using the encryption key after the change. On the other hand, in a case where the logical blocks 31 are not to be encrypted and decrypted, the erasure controller 14 just obtains data read from the logical blocks 31 without decryption.

In step S5, the erasure controller 14 receives the original data, which has been temporarily saved, from the external information processing apparatus.

In step S6, the erasure controller 14 determines whether or not the current data is different from the original data: if YES, the process proceeds to step S7; if NO, the process proceeds to step S8. Here, since the current data is compared with the original data per each logical block 31, the step can be executed using the RAM 12 having a size of several GB to several tens of GB.

In step S7, the erasure controller 14 outputs a verification result indicating that the data has been successfully erased, to the display device 18. In step S8, the erasure controller 14 outputs a verification result indicating that the data erasure has failed, to the display device 18.

According to the process of Fig. 4, since a large amount of data that cannot be stored in the RAM 12 is compared, the external information processing apparatus is required to temporarily save the data. Therefore, it is required to provide a method for verifying data erasure, that can be executed by only the information processing apparatus 1, without requiring the external information processing apparatus.

Fig. 5 is a flowchart showing an erasure process according to a comparison example 2. Fig. 5 shows a method for verifying data erasure as disclosed in Patent Document 1.

In step S11, the erasure controller 14 writes known pattern data to the logical blocks 31, for example, the logical blocks 31 being designated as shown in Fig. 3. The pattern data includes, for example, a bit string of all 1s, a bit string of all 0s, a random bit string, or the like. The pattern data is stored in advance in the nonvolatile memory 15. The pattern data is encrypted using the encryption key before the change, and written in the designated logical blocks 31 of the storage area.

In step S12, the erasure controller 14 changes the encryption key stored in the nonvolatile memory 23.

In step S13, the erasure controller 14 reads the current data of the same designated logical blocks 31 as those of step S11.

In step S14, the erasure controller 14 determines whether or not the current data is different from the pattern data: if YES, the process proceeds to step S15; if NO, the process proceeds to step S16.

In step S15, the erasure controller 14 outputs a verification result indicating that the data has been successfully erased, to the display device 18. Further, in step S16, the erasure controller 14 outputs a verification result indicating that the data erasure has failed, to the display device 18.

As described above, in a case where the encryption key before the change is stored in the nonvolatile memory 23, the pattern data is written to the designated logical blocks 31 in the storage area. Therefore, the pattern data substantially corresponds to the "original data" of the process of Fig. 4, that is, the data read from the designated logical blocks 31 in the storage area in a case where the encryption key before the change is stored in the nonvolatile memory 23.

According to the process of Fig. 5, by using the known pattern data, the process can be executed by only the information processing apparatus 1, without requiring the external information processing apparatus. However, according to the process of Fig. 5, a large load is applied to the information processing apparatus 1 in order to compare a large amount of data, in a manner similar to that of the process of Fig. 4. Therefore, it is required to provide an erasure process capable of verifying whether or not data has been successfully erased, with a smaller load.

Next, we will describe an erasure process according to the embodiment, which is capable of verifying whether or not data has been successfully erased, with a smaller load.

### [IMPLEMENTATION EXAMPLE 1]

Fig. 6 is a flowchart showing an erasure process according to an implementation example 1, executed by the erasure controller 14 of Fig. 1.

In step S21, the erasure controller 14 reads original data of logical blocks 31, for example, the logical blocks 31 designated as shown in Fig. 3. Then, in step S22, the erasure controller 14 compresses the original data using a predetermined compression algorithm. The compressed original data may be stored in the RAM 12, since the information processing apparatus 1 is not powered off during executing the process of Fig. 6 (in particular, at times before and after changing the encryption key).

In step S23, the erasure controller 14 changes the encryption key stored in the nonvolatile memory 23.

In step S24, the erasure controller 14 reads current data of the same designated logical blocks 31 as those of step S21.

In step S25, the erasure controller 14 reads and decompresses the compressed original data.

In step S26, the erasure controller 14 determines whether or not the current data is different from the pattern data, based on the current data and the original data obtained in steps S24 and S25: if YES, the process proceeds to step S27; if NO, the process proceeds to step S28.

In step S27, the erasure controller 14 outputs a verification result indicating that the data has been successfully erased, to the display device 18. Further, in step S28, the erasure controller 14 outputs a verification result indicating that the data erasure has failed, to the display device 18.

According to the process of Fig. 6, it is not necessary to temporarily save the original data.in an external information processing apparatus. Further, in general, a solid state drive takes a longer time to write data than that of reading data. According to the process of Fig. 6, since it is not necessary to write pattern data in the storage device 13, the processing time can be shortened as compared with that of Fig. 5. As described above, according to the implementation example 1, it is possible to verify whether or not the data has been successfully erased, with a small load.

According to the process of Fig. 4, for example, in a case of erasing data stored in a storage device having a storage capacity of 256 MB, and comparing data before and after changing an encryption key for 10 % of a storage area, it is necessary to temporarily save 25.6 GB of original data. Similarly, according to the process of Fig. 4, in cases of storage devices having storage capacities of 512 GB, 1 TB, and 2 TB, respectively, it is necessary to temporarily save 51.2 GB, 100 GB, and 200 GB of original data, respectively. On the other hand, according to the process of Fig. 6, for example, in a case of erasing data stored in a storage device having a storage capacity of 256 MB, and comparing data before and after changing an encryption key for 10 % of a storage area, a compressed original data has a size of 10 GB when using a compression algorithm for compressing data to 40 % in size. Similarly, according to the process of Fig. 6, in cases of storage devices having storage capacities of 512 GB, 1 TB, and 2 TB, respectively, compressed original data have sizes of 20 GB, 40 GB, and 80 GB, respectively. Therefore, in a case of executing the process of Fig. 6 for a commercially-available personal computer provided with a RAM and a storage device of common sizes, compressed original data can be stored in the RAM. Thus, it is possible to verify whether or not the data has been successfully erased, with a small load, without temporarily saving data to an external information processing apparatus.

In a case where the logical blocks 31 to be compared are randomly designated, it is necessary to further store the addresses of the logical blocks 31. In a case where the storage area is divided into 10000 or 1000 logical blocks 31, the address (0 to 9999 or 0 to 999) of each logical block 31 is represented by 2 bytes. Therefore, in a case of reading and verifying data of 1000, 500, 100, or 50 logical blocks 31, the total size of the stored addresses is 2000 bytes, 1000 bytes, 200 bytes, or 100 bytes. In any case, the size of the stored addresses is relatively small.

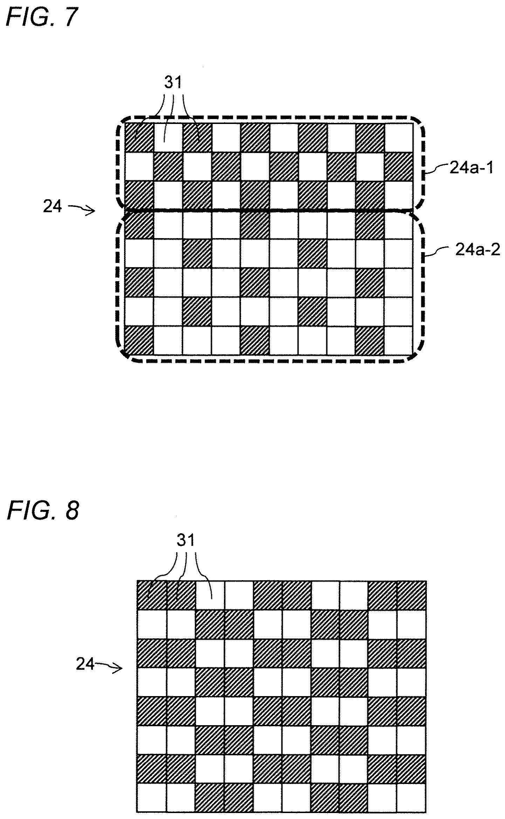

Fig. 7 is a schematic diagram showing the logical blocks 31 of the flash memory 24 of Fig. 2, the diagram showing a first modification of an arrangement of the logical blocks 31 to be compared for verifying data erasure. The storage area may include a plurality of partial areas 24a-1 to 24a-2 logically divided from the storage area, each of the partial areas 24a-1 to 24a-2 including a plurality of logically sequential logical blocks 31. In the example of Fig. 7, the partial area 24a-1 has a smaller logical address than a logical address of the partial area 24a-2. For each of the partial areas 24a-1 to 24a-2, the erasure controller 14 may designate a number of logical blocks 31 with a ratio to the logical blocks 31 included in the partial area, the ratio being different for the partial area (for example, hatched logical blocks 31 of Fig. 7). It is considered that there is a high possibility that important files of the information processing apparatus 1 (for example, confidential data, such as a login password to enter the information processing apparatus 1) are stored in logical blocks 31 having small logical addresses. Therefore, the erasure controller 14 may designate the logical blocks 31 with a larger ratio for the partial area 24a-1, than a ratio for the partial area 24a-2. By designating the logical blocks 31 as shown in Fig. 7, it is possible to more reliably verify erasure of data stored in the area considered to include the important files of the information processing apparatus 1.

The storage area of the storage device 13 may be divided into not only two partial areas 24a-1 to 24a-2, but also three or more partial areas.

Fig. 8 is a schematic diagram showing the logical blocks 31 of the flash memory 24 of Fig. 2, the diagram showing a second modification of an arrangement of the logical blocks 31 to be compared for verifying data erasure. The erasure controller 14 may designate logical blocks 31 logically adjacent to each other (for example, hatched logical blocks 31 of Fig. 8).

### [IMPLEMENTATION EXAMPLE 2]

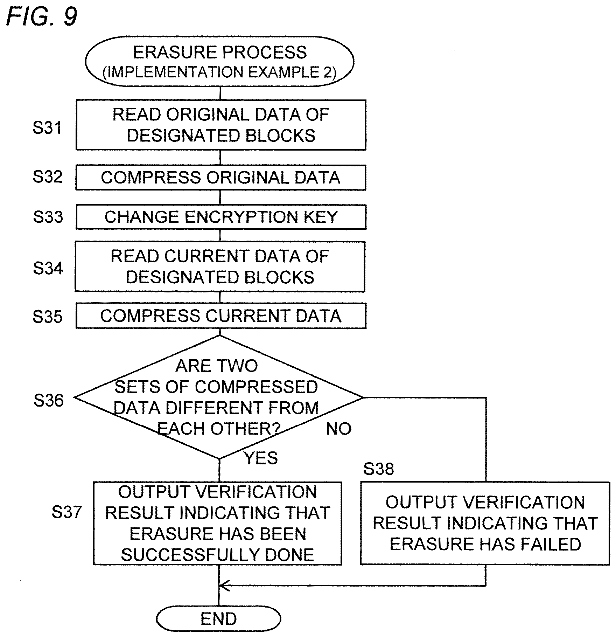

Fig. 9 is a flowchart showing an erasure process according to an implementation example 2, executed by the erasure controller 14 of Fig. 1.

In step S31, the erasure controller 14 reads original data of logical blocks 31, for example, the logical blocks 31 being designated as shown in Fig. 3, Fig. 7, or Fig. 8. Then, in step S32, the erasure controller 14 compresses the original data using a predetermined compression algorithm. In the implementation example 2, the compressed original data forms first sample data.

In step S33, the erasure controller 14 changes the encryption key stored in the nonvolatile memory 23.

In step S34, the erasure controller 14 reads current data of the same designated logical blocks 31 as those of step S31. Then, in step S35, the erasure controller 14 compresses current data using the same compression algorithm as that used to compress the original data. In the implementation example 2, the compressed current data forms second sample data.

In step S36, the erasure controller 14 determines whether or not the compressed current data is different from the compressed original data, without decompressing the compressed original data and current data: if YES, the process proceeds to step S37; if NO, the process proceeds to step S38.

If the compressed data is not decompressed, a lossy compression algorithm may be used. In a case of using a lossy compression algorithm, compressed data of different pieces of data may collide. However, it is considered that there is a very low possibility that the compressed original data and the compressed current data collide in every logical block 31 to be compared. Therefore, for example, in a case of comparing compressed data in the 1000 logical blocks 31, the erasure controller 14 may determine that the data has been successfully erased, even when the compressed data match in several logical blocks 31. In addition, in a case where the compressed data differ in half or more of the logical blocks 31, the erasure controller 14 may determine that the data has been successfully erased.

In addition, in a case where the compressed original data and the compressed current data match in several logical blocks 31 close to each other, the erasure controller 14 may determine that the data erasure has failed. In this case, it is considered that the area including these logical blocks 31 is not to be encrypted and decrypted.

In step S37, the erasure controller 14 outputs a verification result indicating that the data has been successfully erased, to the display device 18. Further, in step S38, the erasure controller 14 outputs a verification result indicating that the data erasure has failed, to the display device 18.

When two pieces of data differ from each other, in general, two pieces of compressed data also differ from each other. Therefore, the compressed current data can be compared with the compressed original data, without decompression. According to the process of Fig. 9, by comparing the compressed original data and current data with each other, it is possible to reduce a processing time, and reduce a size of the RAM 12 necessary for processing, than those of comparing uncompressed original data and current data with each other.

### [IMPLEMENTATION EXAMPLE 3]

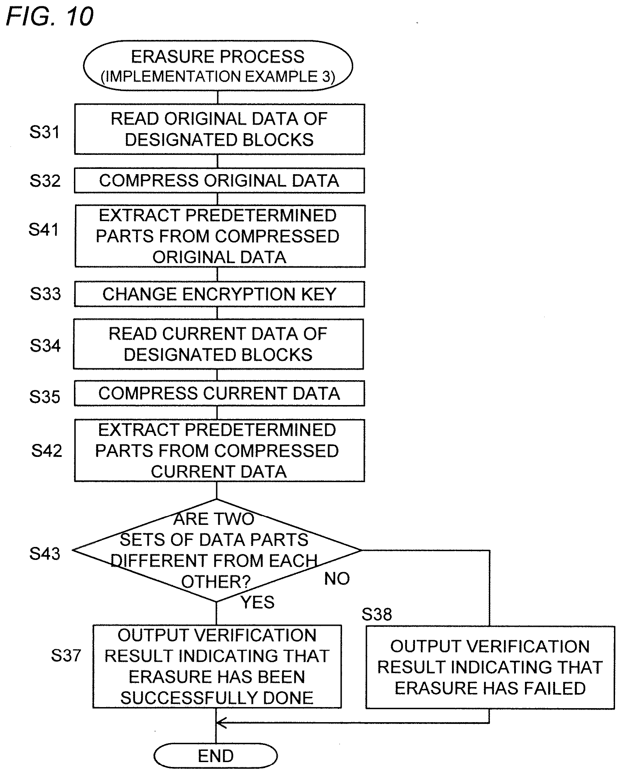

Fig. 10 is a flowchart showing an erasure process according to an implementation example 3, executed by the erasure controller 14 of Fig. 1. The process of Fig. 10 includes steps S41 to S43, instead of step S36 of Fig. 9.

In step S41, the erasure controller 14 extracts one or more predetermined parts from the compressed original data having been compressed in step S32. The predetermined part(s) includes, for example, first 10 bytes of the original data. It is not necessary to retain entire compressed original data, and only the extracted part(s) is retained in the RAM 12 or the nonvolatile memory 15. In the implementation example 3, the part(s) extracted from the original data forms first sample data.

In step S42, the erasure controller 14 extracts one or more predetermined parts from the compressed current data having been compressed in step S35, the one or more predetermined parts being the same as those of step S41. In the implementation example 3, the part(s) extracted from the current data forms second sample data.

In step S43, the erasure controller 14 determines whether or not the data part(s) extracted in step S42 is different from the data part(s) extracted in step S41: if YES, the process proceeds to step S37; if NO, the process proceeds to step S38.

According to the process of Fig. 10, by comparing parts of the compressed original data and current data with each other, it is possible to reduce a processing time, and reduce a size of the RAM 12 necessary for processing, than those of comparing the entire compressed original data and current data with each other.

### [IMPLEMENTATION EXAMPLE 4]

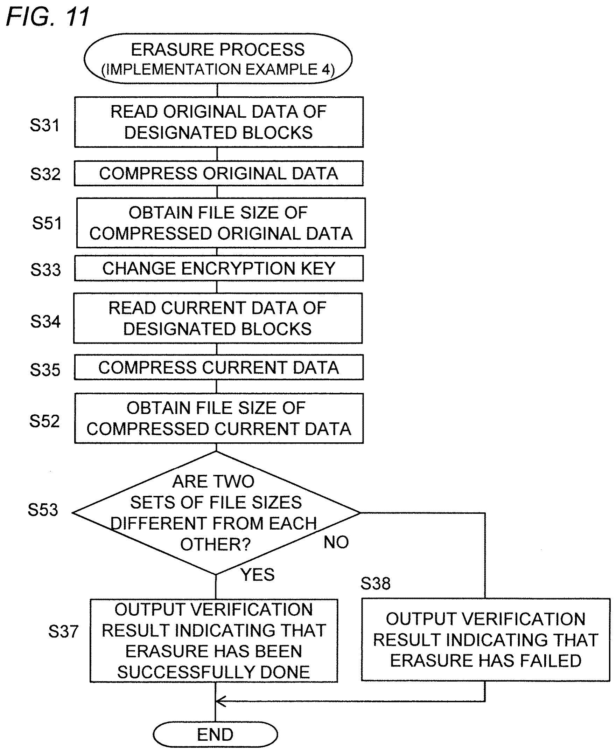

Fig. 11 is a flowchart showing an erasure process according to an implementation example 4, executed by the erasure controller 14 of Fig. 1. The process of Fig. 11 includes steps S51 to S53, instead of step S36 of Fig. 9.

In step S51, the erasure controller 14 obtains a file size of the compressed original data having been compressed in step S32. It is not necessary to retain entire compressed original data, and only the file size is retained in the RAM 12 or the nonvolatile memory 15. In the implementation example 4, the file size of the compressed original data forms first sample data.

In step S52, the erasure controller 14 obtains a file size of the compressed current data having been compressed in step S35. In the implementation example 4, the file size of the compressed current data forms second sample data.

In step S53, the erasure controller 14 determines whether or not the file size of the compressed current data is different from the file size of the compressed original data: if YES, the process proceeds to step S37; if NO, the process proceeds to step S38.

When two pieces of data differ from each other, in general, the file sizes of two pieces of compressed data also differ from each other. According to the process of Fig. 11, by comparing the file sizes of the compressed original data and current data with each other, it is possible to reduce a processing time, and reduce a size of the RAM 12 necessary for processing, than those of comparing the entire compressed original data and current data with each other.

### [IMPLEMENTATION EXAMPLE 5]

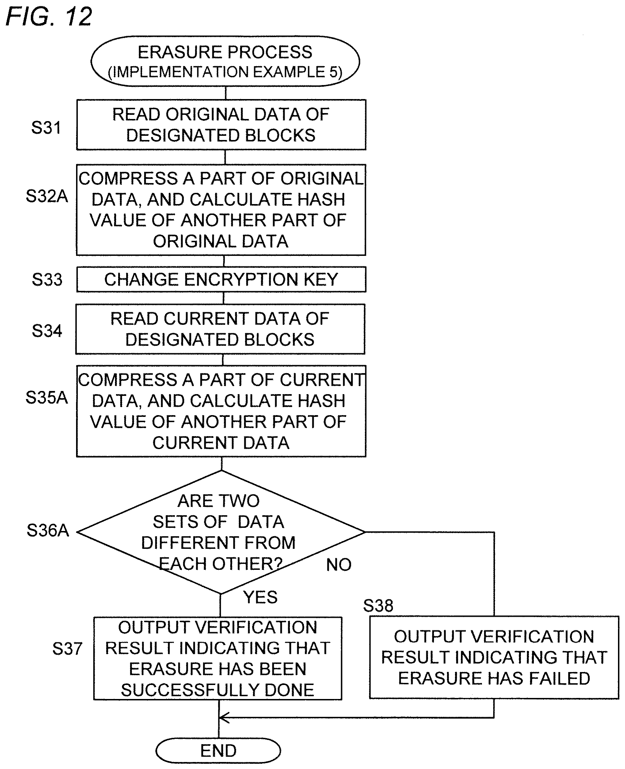

Fig. 12 is a flowchart showing an erasure process according to an implementation example 5, executed by the erasure controller 14 of Fig. 1. The process of Fig. 12 includes steps S32A, S35A, and S36A, instead of steps S32, S35, and S36 of Fig. 9.

In step S32A, the erasure controller 14 compresses a part of the original data, and calculates a hash value(s) of another part of the original data using an arbitrary hash function. The erasure controller 14 may alternately compress the original data, and calculate a hash value, for the plurality of designated logical blocks 31. The erasure controller 14 may compress the original data for every designated logical block 31, and calculate a hash value of the original data for every designated logical block 31. Further, the erasure controller 14 may compress the original data for every designated logical block 31, and calculate a hash value(s) of the original data for a part of the designated logical blocks 31. Further, the erasure controller 14 may calculate a hash value of the original data for every designated logical block 31, and compress the original data for a part of the designated logical blocks 31.

The hash function may be, for example, SHA-2 function, such as SHA-256. The SHA-256 function generates a 256-bit (32 bytes) hash value from data having an arbitrary length of up to 2⁽⁶⁴⁻¹⁾ bits.

When calculating a hash value(s) of the original data, one hash value may be calculated per each logical block 31, or one hash value may be calculated per a predetermined number of logical blocks 31. In the latter case, the RAM 12 includes a buffer memory for storing the read data. The buffer memory has a size of, for example, 10 times that of the logical block 31. The erasure controller 14 sequentially writes the read data to the buffer memory, and calculates a hash value of the data when the buffer memory becomes full.

Each hash value is calculated based on data stored in the logical blocks 31 logically adjacent to each other, for example, as shown in Fig. 8. Each hash value may be calculated based on a logical product, a logical sum, or an exclusive logical sum of data stored in two logical blocks 31 logically adjacent to each other. By designating the logical blocks 31 as shown in Fig. 8, there is a possibility of avoiding collision of hash values.

In the implementation example 5, the compressed original data, and the hash value(s) of the original data form first sample data. The first sample data may include a part of the compressed original data, or a file size of the compressed original data, instead of the entire compressed original data.

In step S35A, the erasure controller 14 compresses a part of the current data, and calculates a hash value(s) of another part of the current data, using the same hash function as that used to calculate the hash value(s) of the original data. The current data to be compressed is read from the same logical blocks 31 as those including the original data to be compressed. In addition, the current data for calculating a hash value(s) is read from the same logical blocks 31 as those including the original data for calculating a hash value(s).

When calculating a hash value(s) of the current data, one hash value may be calculated per each logical block 31, or one hash value may be calculated per the predetermined number of logical blocks 31, in a manner similar to that of calculating the hash value(s) of the original data. As a result, for the same one or more logical blocks 31, the hash value(s) of the original data is calculated, and the hash value(s) of the current data is calculated.

In the implementation example 5, the compressed current data, and the hash value(s) of the current data form second sample data. The second sample data may include a part of the compressed current data, or a file size of the compressed current data, instead of the entire compressed current data.

In step S36A, the erasure controller 14 determines whether or not the second sample data generated in step S35A is different from the first sample data generated in step S32A, if YES, the process proceeds to step S37; if NO, the process proceeds to step S38. The erasure controller 14 may at first determine whether or not the hash value(s) of the current data is different from the hash value(s) of the original data, and if the hash values match, then determine whether or not the compressed current data is different from the compressed original data. The hash value varies even when only a part of data in the storage area changes. In addition, there is a very low possibility that the hash values collide. In general, since a size of a hash value is smaller than a file size of compressed data, it is possible to reduce a processing time and a load by comparing hash values at first. Further, in a case where a file size of compressed data is smaller than a size of a hash value (for example, a case of using a part or file size of compressed data), the erasure controller 14 may at first determines whether or not the compressed current data is different from the compressed original data, and if the data match, then determine whether or not the hash value(s) of the current data is different from the hash value(s) of the original data.

Hash values of different data may collide. However, it is considered that there is a very low possibility that the hash value of the original data and the hash value of the current data collide in every logical block 31 to be compared. Therefore, for example, in a case where hash values are compared for 1000 logical blocks 31, the erasure controller 14 may determine that the data has been successfully erased, even when the hash values match in several logical blocks 31. In addition, in a case where the hash values differ for half or more of the logical blocks 31, the erasure controller 14 may determine that the data has been successfully erased.

In addition, in a case where the hash values of the original data and the hash values of the current data match in several logical blocks 31 close to each other, the erasure controller 14 may determine that the data erasure has failed. In this case, it is considered that the area including these logical blocks 31 is not to be encrypted and decrypted.

According to the process of Fig. 12, since the compressed data is combined with the hash values, even when one collides accidentally, verification can continue based on the other, and thus, it is possible to more reliably verify whether or not the data has been successfully erased.

In addition, in the case of calculating one hash value per the number of logical blocks 31, it is possible to reduce computational complexity, improve a processing speed, and reduce a storage capacity necessary for storing calculated hash values, as compared with the case of calculating one hash value per each logical block 31.

### [IMPLEMENTATION EXAMPLE 6]

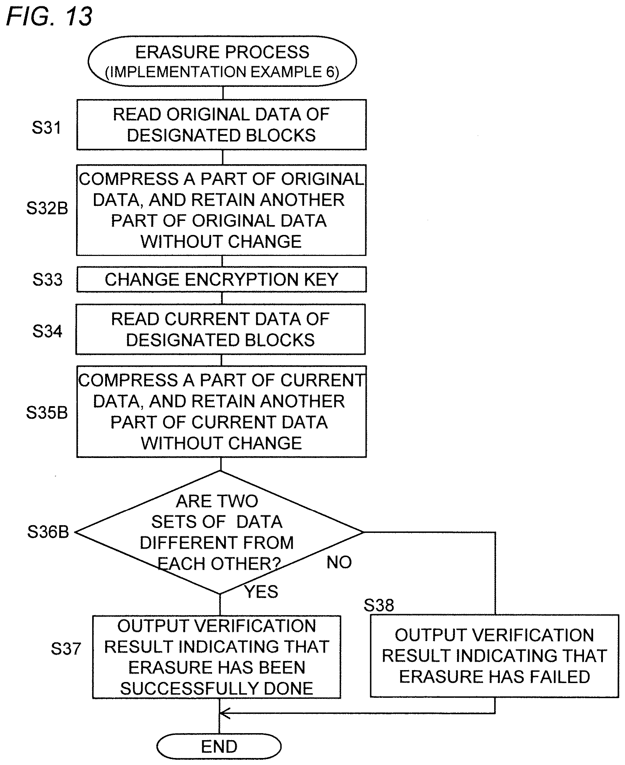

Fig. 13 is a flowchart showing an erasure process according to an implementation example 6, executed by the erasure controller 14 of Fig. 1. The process of Fig. 13 includes steps S32B, S35B, and S36B, instead of steps S32, S35, and S36 of Fig. 9.

In step S32B, the erasure controller 14 compresses a part of the original data, and retains another part of the original data without change. The erasure controller 14 may alternately compress the original data, and retains the original data without change, for the plurality of designated logical blocks 31. The erasure controller 14 may compress the original data for every designated logical block 31, and retain the original data without change for every designated logical block 31. Further, the erasure controller 14 may compress the original data for every designated logical block 31, and retain the original data without change for a part of the designated logical blocks 31.

In the implementation example 6, the compressed original data, and the original data retained without change form first sample data. The first sample data may include a part of the compressed original data, or a file size of the compressed original data, instead of the entire compressed original data.

In step S35B, the erasure controller 14 compresses a part of the current data, and retains another part of the current data without change. The current data to be compressed is read from the same logical blocks 31 as those including the original data to be compressed. In addition, the current data to be retained without change is read from the same logical blocks 31 as those including the original data to be retained without change.

In the implementation example 6, the compressed current data, and the current data retained without change form second sample data. The second sample data may include a part of the compressed current data, or a file size of the compressed current data, instead of the entire compressed current data.

In step S36B, the erasure controller 14 determines whether or not the second sample data generated in step S35B is different from the first sample data generated in step S32B, if YES, the process proceeds to step S37; if NO, the process proceeds to step S38. The erasure controller 14 may at first determine whether or not the compressed current data is different from the compressed original data, and if the data match, then determine whether or not the uncompressed current data is different from the uncompressed original data.

According to the process of Fig. 13, since the compressed data is combined with the uncompressed data, even when one collides accidentally, verification can continue based on the other, and thus, it is possible to more reliably verify whether or not the data has been successfully erased.

### [IMPLEMENTATION EXAMPLE 7]

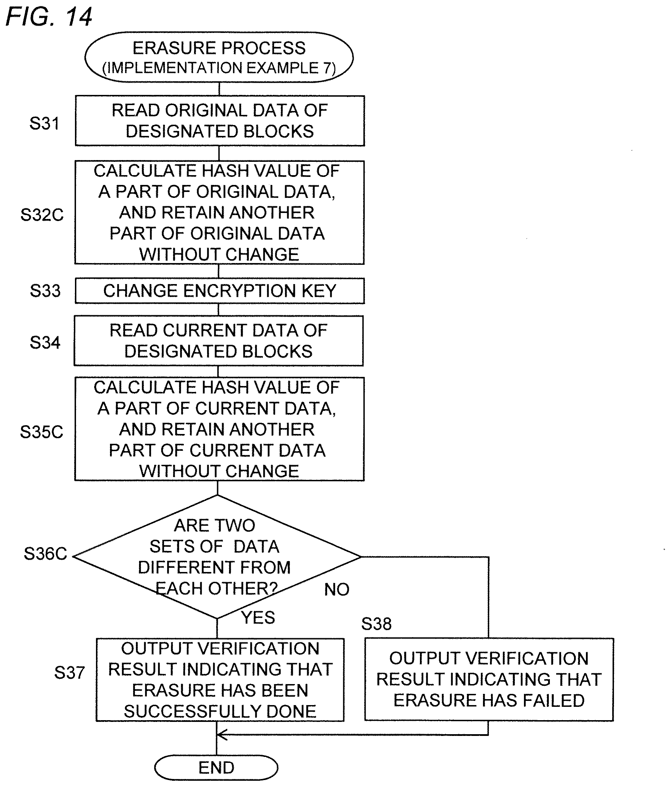

Fig. 14 is a flowchart showing an erasure process according to an implementation example 7, executed by the erasure controller 14 of Fig. 1. The process of Fig. 13 includes steps S32C, S35C, and S36C, instead of steps S32, S35, and S36 of Fig. 9.

In step S32C, the erasure controller 14 calculates a hash value(s) of a part of the original data using an arbitrary hash function, and retains another part of the original data without change. The erasure controller 14 may alternately calculate a hash value(s) of the original data, and retains the original data without change, for the plurality of designated logical blocks 31. The erasure controller 14 may calculate a hash value(s) of the original data for every designated logical block 31, and retain the original data without change for every designated logical block 31. Further, the erasure controller 14 may calculate a hash value(s) of the original data for every designated logical block 31, and retain the original data without change for a part of the designated logical blocks 31.

In the implementation example 7, the hash value(s) of the original data, and the original data retained without change form first sample data.

In step S35C, the erasure controller 14 calculates a hash value(s) of a part of the current data, using the same hash function as that used to calculate the hash value(s) of the original data, and retains another part of the current data without change. The current data for calculating a hash value(s) is read from the same logical blocks 31 as those including the original data for calculating a hash value(s). In addition, the current data to be retained without change is read from the same logical blocks 31 as those including the original data to be retained without change.

In the implementation example 7, the hash value(s) of the current data, and the current data retained without change form second sample data.

In step S36C, the erasure controller 14 determines whether or not the second sample data generated in step S35C is different from the first sample data generated in step S32C, if YES, the process proceeds to step S37; if NO, the process proceeds to step S38. The erasure controller 14 may at first determine whether or not the hash value(s) of the current data is different from the hash value(s) of the original data, and if the data match, then determine whether or not the uncompressed current data is different from the uncompressed original data.

According to the process of Fig. 14, since the hash values are combined with the uncompressed data, even when one collides accidentally, verification can continue based on the other, and thus, it is possible to more reliably verify whether or not the data has been successfully erased.

### [IMPLEMENTATION EXAMPLE 8]

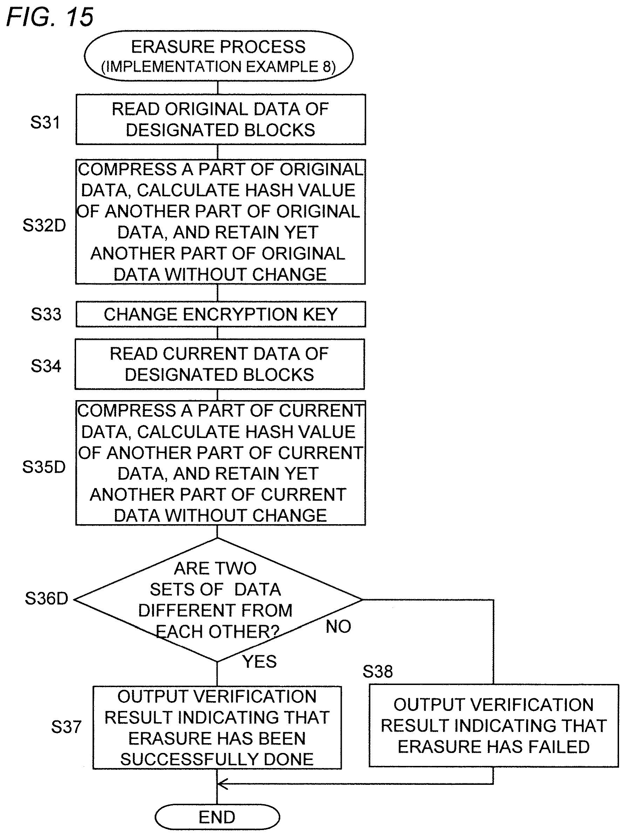

Fig. 15 is a flowchart showing an erasure process according to an implementation example 8, executed by the erasure controller 14 of Fig. 1. The process of Fig. 13 includes steps S32D, S35D, and S36D, instead of steps S32, S35, and S36 of Fig. 9.

In step S32D, the erasure controller 14 compresses a part of the original data, calculates a hash value(s) of another part of the original data using an arbitrary hash function, and retains yet another part of the original data without change. The erasure controller 14 may sequentially compress the part of the original data, calculate the hash value(s) of the original data, and retain the original data without change, for the plurality of designated logical blocks 31. The erasure controller 14 may compress the original data for every designated logical block 31, calculate a hash value of the original data for every designated logical block 31, and retain the original data without change for every designated logical block 31. Further, the erasure controller 14 may compress the original data for every designated logical block 31, calculate a hash value(s) of the original data for every designated logical block 31, and retain the original data without change for a part of the designated logical blocks 31. Further, the erasure controller 14 may compress the original data for every designated logical block 31, calculate a hash value(s) of the original data for a part of the designated logical blocks 31, and retain the original data without change for a part of the designated logical blocks 31. Further, the erasure controller 14 may calculate a hash value of the original data for every designated logical block 31, compress the original data for a part of the designated logical blocks 31, and retain the original data without change for a part of the designated logical blocks 31.

In the implementation example 8, the compressed original data, the hash value(s) of the original data, and the original data retained without change form first sample data. The first sample data may include a part of the compressed original data, or a file size of the compressed original data, instead of the entire compressed original data.

In step S35D, the erasure controller 14 compresses a part of the current data, calculates a hash value(s) of another part of the current data, using the same hash function as that used to calculate the hash value(s) of the original data, and retains yet another part of the current data without change. The current data to be compressed is read from the same logical blocks 31 as those including the original data to be compressed. In addition, the current data for calculating a hash value(s) is read from the same logical blocks 31 as those including the original data for calculating a hash value(s). In addition, the current data to be retained without change is read from the same logical blocks 31 as those including the original data to be retained without change.

In the implementation example 8, the compressed current data, the hash value(s) of the current data, and the current data retained without change form second sample data. The second sample data may include a part of the compressed current data, or a file size of the compressed current data, instead of the entire compressed current data.

In step S36D, the erasure controller 14 determines whether or not the second sample data generated in step S35D is different from the first sample data generated in step S32D, if YES, the process proceeds to step S37; if NO, the process proceeds to step S38. The erasure controller 14 may at first determine whether or not the data match for the one having the smallest file size among the compressed data, the hash values, and the uncompressed data, and if the data match, then determine whether or not the data match for the one having the second smallest file size, and if the data match, then determine whether or not the data match for the remaining one. For example, the erasure controller 14 may at first determine whether or not the hash value(s) of the current data is different from the hash value(s) of the original data, and if the hash values match, then determine whether or not the compressed current data is different from the compressed original data. Further, in a case where a file size of compressed data is smaller than a size of a hash value (for example, a case of using a part or file size of compressed data), the erasure controller 14 may at first determines whether or not the compressed current data is different from the compressed original data, and if the data match, then determine whether or not the hash value(s) of the current data is different from the hash value(s) of the original data.

According to the process of Fig. 15, since the compressed data, the hash values, and the uncompressed data are combined with each other, verification can continue even when one collides accidentally, and thus, it is possible to more reliably verify whether or not the data has been successfully erased.

### [MODIFICATION OF FIRST EMBODIMENT]

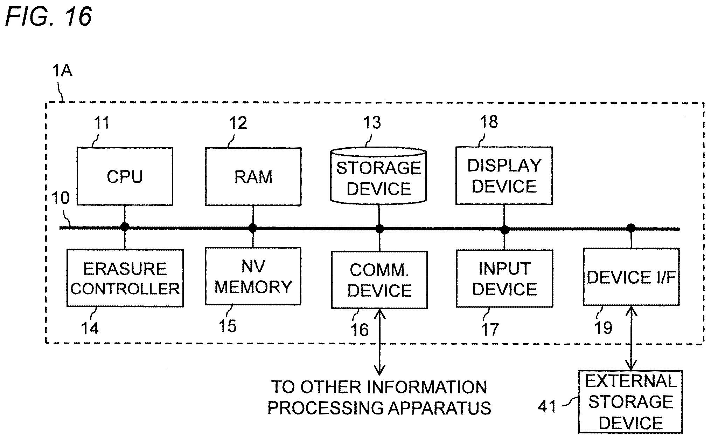

Fig. 16 is a block diagram showing a configuration of an information processing apparatus 1A according to a modification of the first embodiment. The information processing apparatus 1A is provided with the components of the information processing apparatus 1 of Fig. 1, and further provided with a device interface (I/F) 19 for connecting to an external device. The device interface 19 is, for example, a USB. In the example of Fig. 16, the device interface 19 is connected to an external storage device 41, such as a USB memory, a solid state drive, or a hard disk drive.

The program for the erasure process as described with reference to Fig. 6 and others may be stored in the external storage device 41, instead of being stored in the nonvolatile memory 15. In this case, the erasure controller 14 reads and executes the program for the erasure process from the external storage device 41. Further, the program for the erasure process may be divided into a plurality of parts, a part of the program may be stored in the nonvolatile memory 15, and another part of the program may be stored in the external storage device 41. In this case, the partial program stored in the nonvolatile memory 15 is called and executed by executing the partial program stored in the external storage device 41.

For example, in a case where the information processing apparatus 1A executes the erasure process, the compressed original data, the hash value(s) of the original data, and/or the uncompressed original data may be stored in the external storage device 41, instead of being stored in the RAM 12 or the nonvolatile memory 15.

The compressed original data, the hash value(s) of the original data, and/or the uncompressed original data may be transmitted to and stored in an external information processing apparatus connected via the communication device 16. In addition, the information processing apparatuses 1 and 1A may be further provided with a drive device for a storage medium, such as a CD or a DVD, and in this case, the compressed original data, the hash value(s) of the original data, and/or the uncompressed original data may be stored in the CD, the DVD, or the like.

### [IMPLEMENTATION EXAMPLE 9]

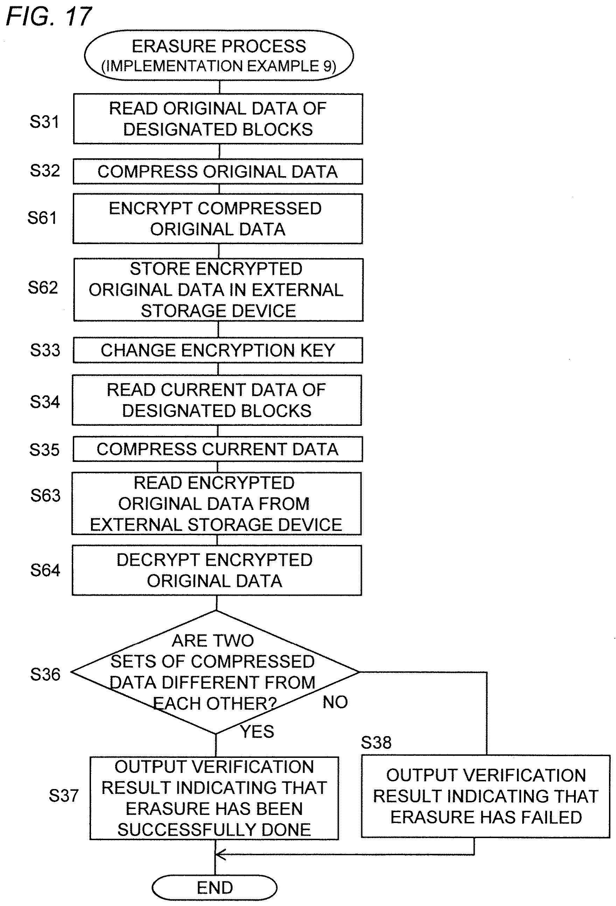

Fig. 17 is a flowchart showing an erasure process according to an implementation example 9, executed by the erasure controller 14 of Fig. 61. The process of Fig. 17 includes steps S61 to S64, as well as the steps of Fig. 9.

In step S61, the erasure controller 14 encrypts the compressed original data. In step S62, the erasure controller 14 stores the encrypted original data in the external storage device 41.

In step S63, the erasure controller 14 reads the encrypted original data from the external storage device 41. In step S64, the erasure controller 14 decrypts the encrypted original data.

In general, the external storage device 41 has a larger storage capacity than those of the RAM 12 and the nonvolatile memory 15. Therefore, according to the process of Fig. 17, since the external storage device 41 is used, it is possible to designate a larger number of logical blocks 31 in order to determine whether or not data has been successfully erased. In addition, according to the process of Fig. 17, since the compressed original data is encrypted and stored in the external storage device 41, there is a reduced possibility of leakage of confidential data, even when the external storage device 41 is lost or stolen.

The process of Fig. 17 indicates the case in which the process of Fig. 9 is applies to the information processing apparatus 1A of Fig. 16. The processes of Figs. 6, 10 to 15 may be applied to the information processing apparatus 1A of Fig. 16, with addition of steps of encryption and decryption.

### [ADVANTAGEOUS EFFECTS AND OTHERS OF FIRST EMBODIMENT]

An information processing apparatus 1 of the present disclosure is provided with: a storage device 13 having a self-encrypting function of data to be stored; and an erasure controller 14 that controls erasure of data stored in the storage device 13. The storage device 13 is provided with: a storage medium having a storage area; a nonvolatile memory 23 storing an encryption key; an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory 23, the erasure controller 14 generates first sample data by compressing data read from a designated position in the storage area. The erasure controller 14 controls the storage device 13 to change the first encryption key stored in the nonvolatile memory 23 to a second encryption key. In a case where the second encryption key is stored in the nonvolatile memory 23, the erasure controller 14 generates second sample data by compressing data read from the designated position in the storage area. In a case where the second sample data is different from the first sample data, the erasure controller 14 outputs a verification result indicating that the data stored in the storage device 13 has been successfully erased. In a case where the second sample data is identical to the first sample data, the erasure controller 14 outputs a verification result indicating that erasure of the data stored in the storage device 13 has failed.

With such a configuration, it is possible to verify whether or not the data stored in the storage device 13 has been successfully erased, with a smaller load than the prior art.

According to the information processing apparatus 1 of the first embodiment, the first sample data may include: first compressed data obtained by compressing first data read from a first position in in the storage area; and a first hash value calculated based on second data read from a second position in in the storage area. The second sample data may include: second compressed data obtained by compressing third data read from the first position in in the storage area; and a second hash value calculated based on fourth data read from the second position in in the storage area.

With such a configuration, even when one of the compressed data and the hash values collides accidentally, verification can continue based on the other, and thus, it is possible to more reliably verify whether or not the data has been successfully erased.

According to the information processing apparatus 1 of the first embodiment, the first sample data may include: first compressed data obtained by compressing first data read from a first position in in the storage area; and second data read from a second position in in the storage area. The second sample data may include: second compressed data obtained by compressing third data read from the first position in in the storage area; and fourth data read from the second position in in the storage area.

With such a configuration, even when one of the compressed data and the uncompressed data collides accidentally, verification can continue based on the other, and thus, it is possible to more reliably verify whether or not the data has been successfully erased.

According to the information processing apparatus 1 of the first embodiment, the first sample data may include: first compressed data obtained by compressing first data read from a first position in in the storage area; a first hash value calculated based on second data read from a second position in in the storage area; and third data read from a third position in in the storage area. The second sample data may include: second compressed data obtained by compressing fourth data read from the first position in in the storage area; a second hash value calculated based on fifth data read from the second position in in the storage area; and sixth data read from the third position in in the storage area.

With such a configuration, even when one of the compressed data, the hash values, and the uncompressed data collides accidentally, verification can continue based on the other, and thus, it is possible to more reliably verify whether or not the data has been successfully erased.

According to the information processing apparatus 1 of the first embodiment, in a case where a part of the second sample data is different from a corresponding part of the first sample data, the erasure controller 14 may output a verification result indicating that the data stored in the storage device 13 has been successfully erased. In a case where the part of the second sample data is identical to the corresponding part of the first sample data, the erasure controller 14 may output a verification result indicating that erasure of the data stored in the storage device 13 has failed.

With such a configuration, it is possible to reduce a processing time and a load than those of comparing the entire sample data.

According to the information processing apparatus 1 of the first embodiment, in a case where a file size of the second sample data is different from a file size of the first sample data, the erasure controller 14 may output a verification result indicating that the data stored in the storage device 13 has been successfully erased. In a case where the file size of the second sample data is identical to the file size of the first sample data, the erasure controller 14 may output a verification result indicating that erasure of the data stored in the storage device 13 has failed.

With such a configuration, it is possible to reduce a processing time and a load than those of comparing the sample data themselves.

According to the information processing apparatus 1 of the first embodiment, the erasure controller 14 may encrypt the first sample data, and store the encrypted first sample data in an external storage device 41 located external to the information processing apparatus 1.

With such a configuration, it is possible to designate a larger number of positions in the storage area in order to determine whether or not data has been successfully erased. In addition, since the compressed original data is encrypted and stored in the external storage device 41, there is a reduced possibility of leakage of confidential data, even when the external storage device 41 is lost or stolen.

According to the information processing apparatus 1 of the first embodiment, the storage area may include a plurality of blocks. Per predetermined number of blocks, the first sample data and the second sample data may be calculated based on data stored in the predetermined number of blocks.

With such a configuration, it is possible to reduce computational complexity, improve a processing speed, and reduce a storage capacity necessary for storing calculated hash values, as compared with the case of calculating one hash value per each logical block 31.

According to the information processing apparatus 1 of the first embodiment, he storage area may include a plurality of partial areas logically divided from the storage area, each of the partial areas including a plurality of logically sequential blocks. For each of the partial areas, the erasure controller 14 may designate a number of blocks with a ratio to the blocks included in the partial area, the ratio being different for the partial area. The first sample data and the second sample data may be calculated based on data stored in the designated blocks.

With such a configuration, it is possible to more reliably verify erasure of data stored in the area considered to include the important files of the information processing apparatus 1.

According to the information processing apparatus 1 of the first embodiment, the storage area may include a plurality of blocks. The first sample data and the second sample data may be calculated based on data stored in a plurality of blocks logically cent to each other.

With such a configuration, there is a possibility of avoiding collision of hash values.

According to the information processing apparatus 1 of the first embodiment, the information processing apparatus 1 may be provided with a display device 18 that outputs the verification result.

With such a configuration, it is possible to recognize whether or not the data stored in the storage device 13 has been successfully erased.

An information processing apparatus 1 of the present disclosure is provided with: a storage device 13 having a self-encrypting function of data to be stored; and an erasure controller 14 that controls erasure of data stored in the storage device 13. The storage device 13 is provided with: a storage medium having a storage area; a nonvolatile memory 23 storing an encryption key; an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory 23, the erasure controller 14 compresses first data read from a designated position in the storage area. The erasure controller 14 controls the storage device 13 to change the first encryption key stored in the nonvolatile memory 23 to a second encryption key. In a case where the second encryption key is stored in the nonvolatile memory 23, the erasure controller 14 compresses second data read from the designated position in the storage area. In a case where the second data is different from the first data, the erasure controller 14 outputs a verification result indicating that the data stored in the storage device 13 has been successfully erased. In a case where the second data is identical to the first data, the erasure controller 14 outputs a verification result indicating that erasure of the data stored in the storage device 13 has failed.

With such a configuration, it is possible to verify whether or not the data stored in the storage device 13 has been successfully erased, with a smaller load than the prior art.

An information processing apparatus 1 of the present disclosure is provided with: a storage device 13 having a self-encrypting function of data to be stored; and an erasure controller 14 that controls erasure of data stored in the storage device 13. The storage device 13 is provided with: a storage medium having a storage area; a nonvolatile memory 23 storing an encryption key; an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory 23, the erasure controller 14 generates first sample data including a first hash value calculated based on first data read from a first position in in the storage area, and second data read from a second position in in the storage area. The erasure controller 14 controls the storage device 13 to change the first encryption key stored in the nonvolatile memory 23 to a second encryption key. In a case where the second encryption key is stored in the nonvolatile memory 23, the erasure controller 14 generates second sample data including a second hash value calculated based on third data read from the first position in in the storage area, and fourth data read from the second position in in the storage area. In a case where the second sample data is different from the first sample data, the erasure controller 14 outputs a verification result indicating that the data stored in the storage device 13 has been successfully erased. In a case where the second sample data is identical to the first sample data, the erasure controller 14 outputs a verification result indicating that erasure of the data stored in the storage device 13 has failed.

With such a configuration, it is possible to verify whether or not the data stored in the storage device 13 has been successfully erased, with a smaller load than the prior art.

An information processing method of the present disclosure controls erasure of data stored in a storage device 13 having a self-encrypting function. The storage device 13 is provided with: a storage medium having a storage area; a nonvolatile memory 23 storing an encryption key; and an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. The information processing method includes, in a case where a first encryption key is stored in the nonvolatile memory 23, generating first sample data by compressing data read from a designated position in the storage area. The information processing method includes controlling the storage device 13 to change the first encryption key stored in the nonvolatile memory 23 to a second encryption key. The information processing method includes, in a case where the second encryption key is stored in the nonvolatile memory 23, generating second sample data by compressing data read from the designated position in the storage area. The information processing method includes, in a case where the second sample data is different from the first sample data, outputting a verification result indicating that the data stored in the storage device 13 has been successfully erased. The information processing method includes, in a case where the second sample data is identical to the first sample data, outputting a verification result indicating that erasure of the data stored in the storage device 13 has failed.

With such a configuration, it is possible to verify whether or not the data stored in the storage device 13 has been successfully erased, with a smaller load than the prior art.

A program of the present disclosure includes instructions executed by a processor implemented in an information processing apparatus 1. The information processing apparatus 1 is further provided with a storage device 13 having a self-encrypting function of stored data. The storage device 13 is provided with: a storage medium having a storage area, a nonvolatile memory 23 storing an encryption key, and an input/output controller 21. The input/output controller 21 writes input data to the storage area, outputs the data read from the storage area, encrypts at least a part of the data to be written to the storage area using the encryption key, and decrypts at least a part of the data read from the storage area using the encryption key. The instructions cause the processor to execute, in a case where a first encryption key is stored in the nonvolatile memory 23, generate first sample data by compressing data read from a designated position in the storage area. The instructions cause the processor to execute control the storage device 13 to change the first encryption key stored in the nonvolatile memory 23 to a second encryption key. The instructions cause the processor to execute, in a case where the second encryption key is stored in the nonvolatile memory 23, generate second sample data by compressing data read from the designated position in the storage area. The instructions cause the processor to execute, in a case where the second sample data is different from the first sample data, output a verification result indicating that the data stored in the storage device 13 has been successfully erased. The instructions cause the processor to execute, in a case where the second sample data is identical to the first sample data, output a verification result indicating that erasure of the data stored in the storage device 13 has failed.

With such a configuration, it is possible to verify whether or not the data stored in the storage device 13 has been successfully erased, with a smaller load than the prior art.

### [SECOND EMBODIMENT]

In a second embodiment, we will describe a case of displaying progress of data erasure, while executing the erasure process of the first embodiment (see Fig. 9).

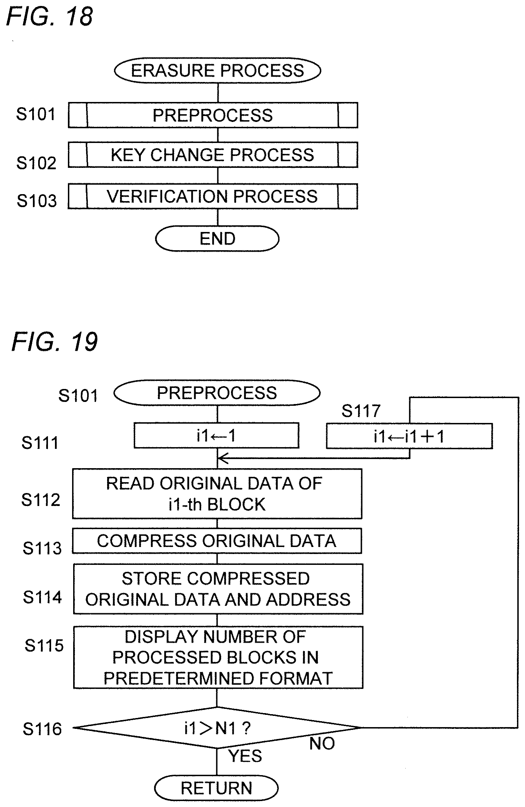

Fig. 18 is a flowchart showing an erasure process executed by an information processing apparatus 1 according to the second embodiment. The information processing apparatus 1 according to the second embodiment is configured in a manner similar to that of the first embodiment. The erasure process of Fig. 18 is executed by the erasure controller 14 of Fig. 1.

In step S101, the erasure controller 14 executes a preprocess to compress original data of designated logical blocks 31.

In step S102, the erasure controller 14 executes a key change process to change the encryption key stored in the nonvolatile memory 23.

In step S103, the erasure controller 14 executes a verification process to determine whether or not the compressed current data is different from the compressed original data, that is, whether or not the data has been successfully erased.

Fig. 19 is a flowchart showing a subroutine of the preprocess (step S101) of Fig. 18.

In step S111, the erasure controller 14 initializes a parameter i1 to 1. The parameter i1 indicates one of the logical blocks 31, for example, the logical blocks 31 being designated as shown in Fig. 3, Fig. 7, or Fig. 8. In the example of Fig. 19, N1 logical blocks 31 are designated.

In step S112, the erasure controller 14 reads original data of the i1-th logical block 31 among the designated logical blocks 31. Then, in step S113, the erasure controller 14 compresses the original data. Steps S112 to S113 are similar to steps S31 to S32 of Fig. 9, except for executing on one of the designated logical blocks 31.

In step S114, the erasure controller 14 stores the compressed original data, and an address of the i1-th logical block 31, in the RAM 12 or the nonvolatile memory 15 (alternatively, the external storage device 41 of Fig. 16).

In step S115, the erasure controller 14 outputs the number of logical blocks 31 for which steps S112 to S114 have been executed, to the display device 18, in a predetermined format.

In step S116, the erasure controller 14 determines whether or not the parameter i1 exceeds a threshold N1: if YES, the process proceeds to step S102 of Fig. 18; if NO, the process proceeds to step S117.

In step S117, the erasure controller 14 increments the parameter i1 by 1, and repeats steps S112 to S116.

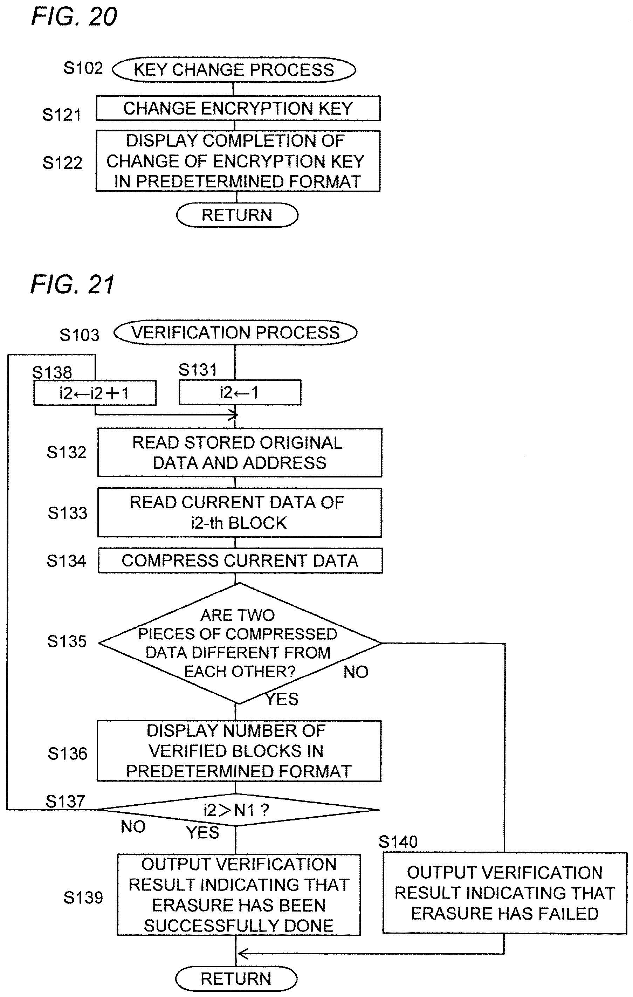

Fig. 20 is a flowchart showing a subroutine of the key change process (step S102) of Fig. 18.

In step S121, the erasure controller 14 changes the encryption key stored in the nonvolatile memory 23. Step S121 is similar to step S33 of Fig. 9.

In step S122, the erasure controller 14 outputs the completion of the change of the encryption key, to the display device 18, in a predetermined format.

Fig. 21 is a flowchart showing a subroutine of the verification process (step S103) of Fig. 18.

In step S131, the erasure controller 14 initializes a parameter i2 to 1. The parameter i2 indicates one of the N1 logical blocks 31 designated in the preprocess of Fig. 19.

In step S132, the erasure controller 14 reads the compressed original data and the addresses stored in the RAM 12 or the nonvolatile memory 15 (alternatively, the external storage device 41 of Fig. 16). The logical blocks 31 for which the hash values have been calculated in the preprocess are identified based on these addresses.

In step S133, the erasure controller 14 reads current data of the i2-th logical block 31 among the logical blocks 31 identified by the addresses read in step S132. Then, in step S134, the erasure controller 14 compresses the current data. Steps S133 to S134 are similar to steps S34 to S35 of Fig. 9, except for executing on one of the designated logical blocks 31.

In step S135, the erasure controller 14 determines whether or not the compressed current data is different from the compressed original data: if YES, the process proceeds to step S136; if NO, the process proceeds to step 140. Step S136 is similar to step S36 of Fig. 9, except for executing on one of the designated logical blocks 31.

In step S136, the erasure controller 14 outputs the number of verified logical blocks 31 to the display device 18 in a predetermined format. The verified logical blocks 31 are logical blocks 31 for which the erasure controller 14 has determined whether or not the compressed current data is different from the compressed original data.

In step S137, the erasure controller 14 determines whether or not the parameter i2 exceeds the threshold N1: if YES, the process ends; if NO, the process proceeds to step S138.

In step S138, the erasure controller 14 increments the parameter i2 by 1, and repeats steps S132 to S137.

In step S139, the erasure controller 14 outputs a verification result indicating that the data has been successfully erased, to the display device 18. In step S140, the erasure controller 14 outputs a verification result indicating that the data erasure has failed, to the display device 18.

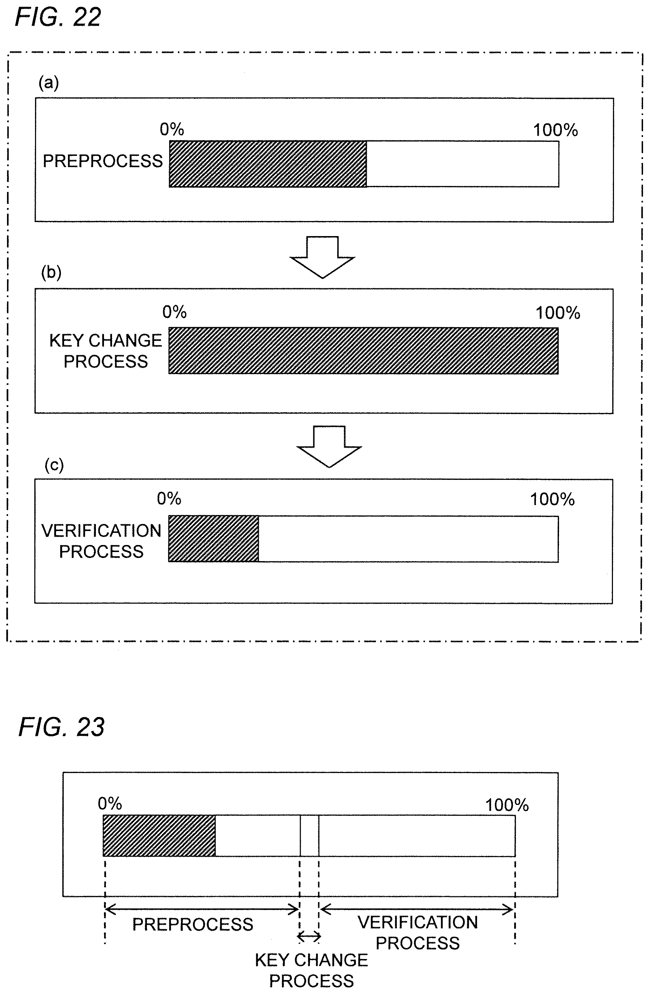

Fig. 22 is a diagram showing an exemplary image showing the progress of data erasure, which is displayed on the display device 18 of Fig. 1 by executing the erasure process of Fig. 18. Fig. 22(a) is an image showing the progress of the preprocess. The progress of the preprocess is represented by, for example, a progress bar indicating a ratio of the number of processed logical blocks 31 to the number of designated logical blocks 31, that is, i1/N1. Fig. 22(b) is an image showing the progress of the key change process. The progress of the key change process is represented by, for example, a progress bar indicating whether or not the encryption key has been changed. Fig. 22(c) is an image showing the progress of the verification process. The progress of the verification process is represented by, for example, a progress bar indicating a ratio of the number of verified logical blocks 31 to the number of designated logical blocks 31, that is, i2/N1.

Fig. 23 is a diagram showing another exemplary image showing the progress of data erasure, which is displayed on the display device 18 of Fig. 1 by executing the erasure process of Fig. 18. The three progress bars shown in Fig. 22 may be combined with each other.

The progress of the data erasure may be displayed as the following text, instead of being displayed as the images as shown in Figs. 21 and 22.

| | |
|---|---|
| Preprocess: | a1 |
| Key change process: | a2 |
| Verification process: | a3 |

Here, "a1" starts from the number of designated blocks, N1, and decreases as the parameter i1 increases (a1 = N1 - i1). "a2" is "1" before changing the encryption key, and "0" after changing the encryption key. "a3" starts from the number of designated blocks, N1, and decreases as the parameter i2 increases (a3 = N1 - i2).

In addition, the progress of the data erasure may be displayed as the following text.

| | |
|---|---|
| Preprocess: | b1/N1 |
| Key change process: | b2 |
| Verification process: | b3/N1 |

Here, b1 = i1. "b2" is "0" before changing the encryption key, and "1" after changing the encryption key. In addition, b3 = i2.

In addition, the progress of the data erasing may be collectively displayed as "c", where c = a1 + a2 + a3. In addition, the progress of the data erasure may be collectively displayed as "d/N", where d = b1 + b2 + b3 and N = N1 × 2 + 1.

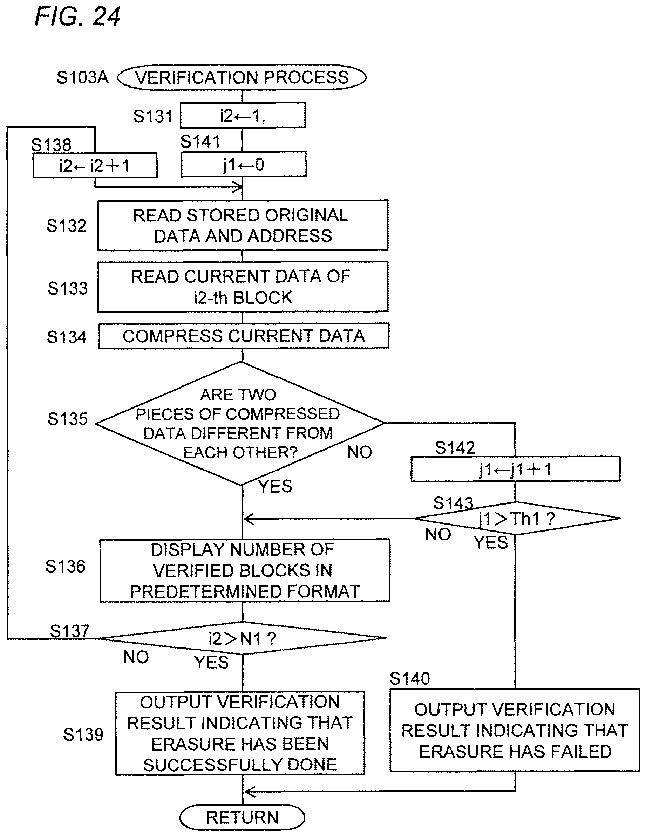

According to the verification process of Fig. 21, in a case where the compressed current data is identical to the compressed original data in one logical block 31, it is determined that the data erasure has failed. However, as described above, in a case of using a lossy compression algorithm, compressed data of different pieces of data may collide. In this case, the erasure controller 14 may determine that the data has been successfully erased, even when the compressed data match in a part of the designated logical blocks 31. Next, with reference to Figs. 24 to 26, we will describe modifications of the verification process that allow such a match of compressed data.

Fig. 24 is a flowchart showing a first modification of the verification process of Fig. 18. The process of Fig. 24 includes steps S141 to S143 as well as the steps of Fig. 21.

In step S141, the erasure controller 14 initializes a parameter j 1 to 0. The parameter j1 is used to count the number of logical blocks 31 in which the compressed current data is identical to the compressed original data.

When it is determined in step S135 that the compressed current data is identical to the compressed original data, the process proceeds to step S142. In step S142, the erasure controller 14 increments the parameter j1 by 1.

In step S143, the erasure controller 14 determines whether or not the parameter j1 exceeds a threshold Th1: if YES, the process proceeds to step S140; if NO, the process proceeds to step S136.

According to the verification process of Fig. 24, even when the match of the compressed data occur in the number of logical blocks 31 equal to or less than the threshold Thl, if the compressed data differ in the other logical blocks 31, it can be determined that the data has been successfully erased.

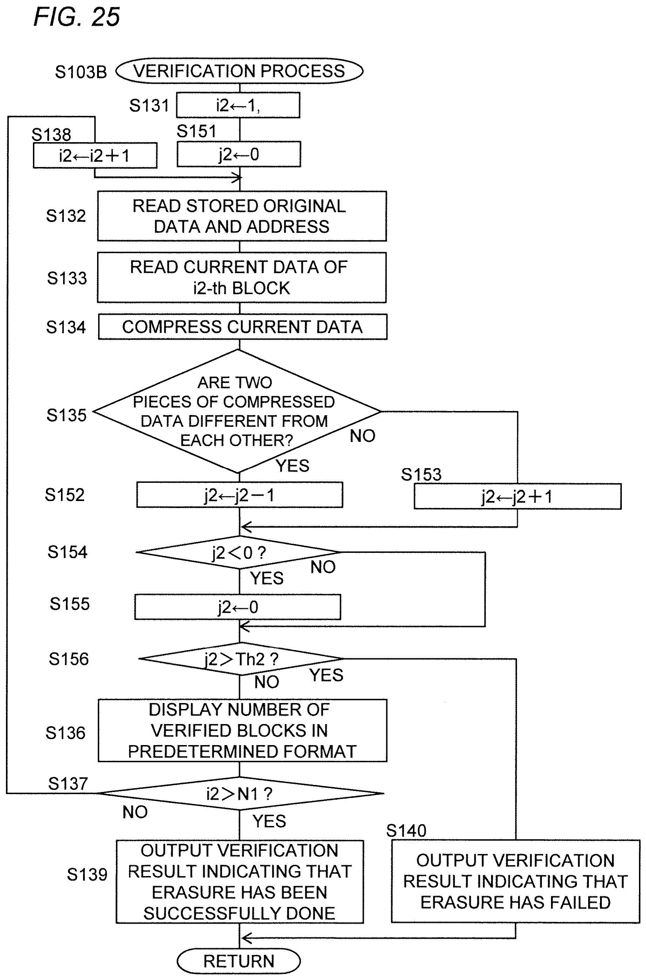

Fig. 25 is a flowchart showing a second modification of the verification process of Fig. 18. The process of Fig. 25 includes steps S151 to S156 as well as the steps of Fig. 21.

In step S151, the erasure controller 14 initializes a parameter j2 to 0. The parameter j2 is used to count the number of matches of compressed data, the matches sequentially occurring in several logical blocks 31 close to each other, among the designated logical blocks 31.

When it is determined in step S135 that the compressed current data is different from the compressed original data, the process proceeds to step S152, and otherwise, the process proceeds to step S153. In step S152, the erasure controller 14 decrements the parameter j2 by 1. In step S153, the erasure controller 14 increments the parameter j2 by 1.

In step S154, the erasure controller 14 determines whether or not the parameter j2 is smaller than 0: if YES, the process proceeds to step S155; if NO, the process proceeds to step S156. In step S155, the erasure controller 14 reinitializes the parameter j2 to 0.

In step S156, the erasure controller 14 determines whether or not the parameter j2 exceeds a threshold Th2: if YES, the process proceeds to step S140; if NO, the process proceeds to step S136.

According to the verification process of Fig. 25, the parameter j2 increases or decreases according to matches or mismatches of the compressed data. Therefore, in a case where matches of the compressed data sequentially occur in several logical blocks 31 close to each other, among the designated logical blocks 31, the parameter j2 increases. In this case, it is considered that the storage area including these logical blocks 31 is not to be encrypted, and data is stored in plain text. On the other hand, in a case where matches and mismatches of the compressed data almost alternately occur in several logical blocks 31 close to each other, among the designated logical blocks 31, the parameter j2 does not increase. In this case, it is considered that the matches of the compressed data are accidental.

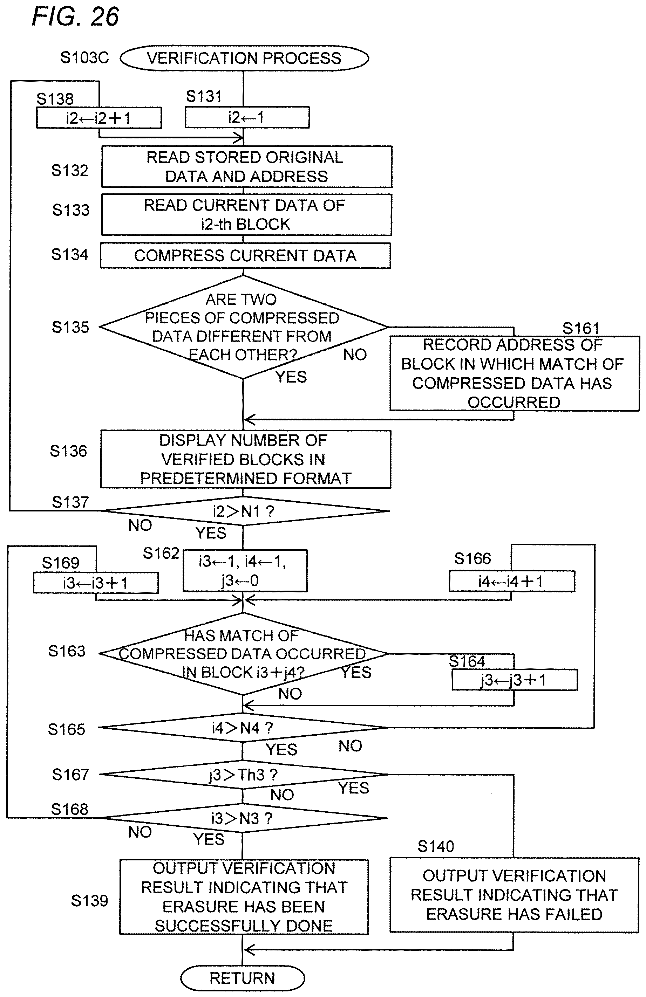

Fig. 26 is a flowchart showing a third modification of the verification process of Fig. 18. The process of Fig. 26 includes steps S161 to S169 as well as the steps of Fig. 21.

When it is determined in step S135 that the compressed current data is identical to the compressed original data, the process proceeds to step S161. In step S161, the erasure controller 14 stores the address of the logical block 31 in which a match of the compressed data has occurred, in the RAM 12 or the nonvolatile memory 15 (alternatively, in the external storage device 41 of Fig. 16).

When the parameter i2 exceeds the threshold N1 in step S137, the process proceeds to step S162. In step S162, the erasure controller 14 initializes parameters i3 and i4 to 1, and initializes a parameter j3 to 0. According to the verification process of Fig. 26, the number of matches of the compressed data is counted in a group of a predetermined number of logical blocks 31 close to each other, among the designated logical blocks 31. The parameter i3 indicates the position of the group of logical blocks 31. The parameter i4 indicates one of the logical blocks 31 included in a certain group. In the example of Fig. 26, each group includes N4 logical blocks 31, and the position of the group is shifted in N3 = N1 - N4 ways, among the designated logical blocks 31. The parameter j3 is used to count the number of matches of the compressed data in a certain group.

In step S163, based on the address stored in step S161, the erasure controller 14 determines whether or not the compressed current data is identical to the compressed original data in the (i3 + i4)-th logical block 31: if YES, the process proceeds to step S164; if NO, the process proceeds to step S165. In step S164, the erasure controller 14 increments the parameter j3 by 1.

In step S165, the erasure controller 14 determines whether or not the parameter i4 exceeds a threshold N4, that is, whether or not all the logical blocks 31 included in the current group have been processed: if YES, the process proceeds to step S167; if NO, the process proceeds to step S166.

In step S166, the erasure controller 14 increments the parameter i4 by 1, and repeats steps S163 to S165.

In step S167, the erasure controller 14 determines whether or not the parameter j3 exceeds a threshold Th3: if YES, the process proceeds to step S140; if NO, the process proceeds to step S168.

In step S168, the erasure controller 14 determines whether or not the parameter i3 exceeds a threshold N3, that is, whether or not the group of logical blocks 31 has been shifted to all positions: if YES, the process proceeds to step S139; if NO, the process proceeds to step S169.

In step S169, the erasure controller 14 increments the parameter i3 by 1, and repeats steps S163 to S168.

According to the process of Fig. 26, in a case where the matches of the compressed data repeatedly occur in the group of the predetermined number of logical blocks 31 close to each other, it is considered that the storage area including these logical blocks 31 is not to be encrypted, and the data is stored in plain text.

The threshold Th3 of step S167 may be set to, for example, a value close to the number N3 of the logical blocks 31 included in the group. In addition, in step S168, the erasure controller 14 may calculate j3/N3, and in this case, the threshold Th3 may be set to, for example, a value close to 1.

### [ADVANTAGEOUS EFFECTS AND OTHERS OF SECOND EMBODIMENT]

According to the information processing apparatus 1 of the second embodiment, the erasure controller 14 may output a progress of erasure of the data stored in the storage device 13, to the display device 18.

With such a configuration, it is possible to recognize the progress of data erasure.

### [THIRD EMBODIMENT]

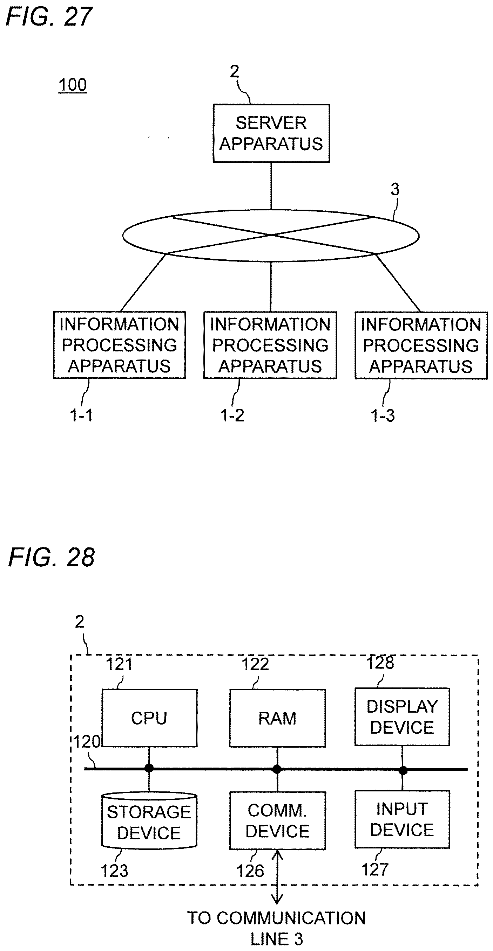

Fig. 27 is a block diagram showing a configuration of an information processing system according to a third embodiment, including an information processing apparatus 1 and a server apparatus. The information processing system of Fig. 27 includes a plurality of information processing apparatuses 1-1 to 1-3, a server apparatus 2, and a communication line 3. Each of the information processing apparatuses 1-1 to 1-3 is configured in a manner similar to that of the information processing apparatus 1 of Fig. 1. The server apparatus 2 is connected to the information processing apparatuses 1-1 to 1-3 via the communication line 3.

In the present description, the information processing apparatuses 1-1 to 1-3 are collectively referred to as "information processing apparatus 1".

Fig. 28 is a block diagram showing a configuration of the server apparatus 2 of Fig. 27. The server apparatus 2 is provided with a bus 120, a CPU 121, a RAM 122, a storage device 123, a communication device 126, an input device 127, and a display device 128. The CPU 121 controls entire operations of the server apparatus 2, and manages erasure of data stored in a storage device 13 of each information processing apparatus 1. The RAM 122 temporarily stores programs and data necessary for the operations of the server apparatus 2. The storage device 123 is a nonvolatile storage medium that stores programs necessary for the operations of the server apparatus 2. The communication device 126 is communicably connected to the information processing apparatuses 1 via the communication line 3. The input device 127 receives user inputs for controlling the operations of the server apparatus 2. The input device 127 includes, for example, a keyboard and a pointing device. The display device 128 displays information related to erasure of data stored in the storage device 13 of each information processing apparatus 1. The CPU 121, the RAM 122, the storage device 123, the communication device 126, the input device 127, and the display device 128 are connected to each other via the bus 120.

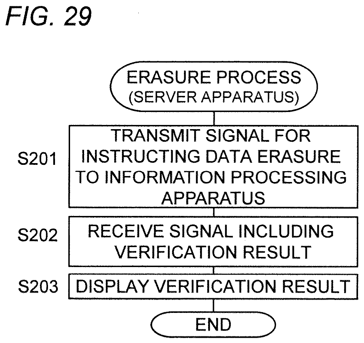

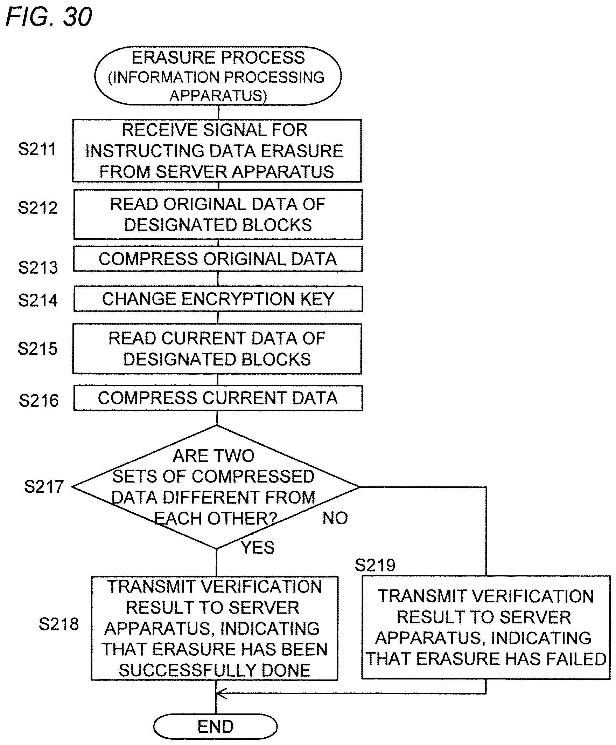

Fig. 29 is a flowchart showing an erasure process executed by the server apparatus 2 of Fig. 27. Fig. 30 is a flowchart showing an erasure process executed by the information processing apparatus 1 of Fig. 27.

In step S201 of Fig. 29, the CPU 121 of the server apparatus 2 transmits a control signal for instructing data erasure, to the information processing apparatus 1.

In step S211 of Fig. 30, the erasure controller 14 of the information processing apparatus 1 receives the control signal for instructing data erasure, from the server apparatus 2. Then, the erasure controller 14 executes steps S212 to S219 according to the control signal. Steps S212 to S217 are similar to steps S31 to S36 of Fig. 9. When it is determined in step S217 that the compressed current data is different from the compressed original data, the process proceeds to step S218, and otherwise, the process proceeds to step S219. In step S218, the erasure controller 14 transmits a notification signal to the server apparatus 2, the notification signal including a verification result indicating that the data has been successfully erased. In step S219, the erasure controller 14 transmits a notification signal to the server apparatus 2, the notification signal including a verification result indicating that the data erasure has failed.

In step S202 of Fig. 29, the CPU 121 of the server apparatus 2 receives the notification signal indicating the verification result, from the information processing apparatus 1. In step S203, the CPU 121 outputs the verification result to the display device 128.

According to the processes of Figs. 29 and 30, the server apparatus 2 can control erasure of the data stored in the storage devices 13 of the plurality of information processing apparatuses 1, in a concentrated manner, and in addition, it is possible to verify whether or not the data has been successfully erased, with a small load.

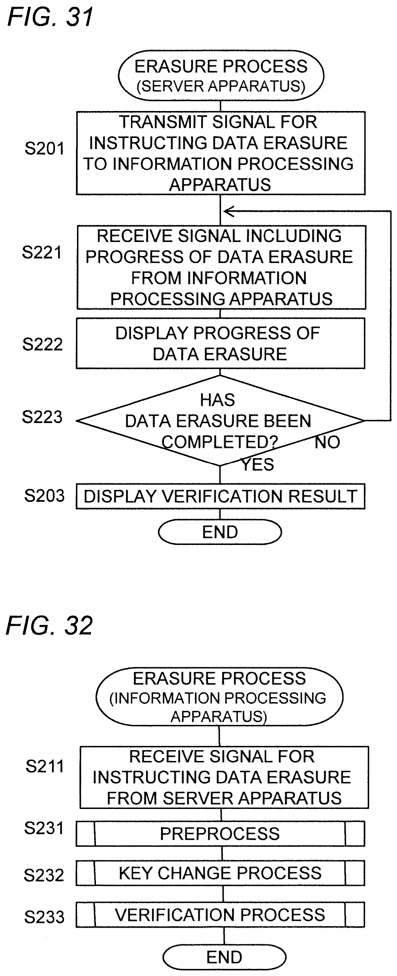

In addition, as described with reference to Figs. 31 to 35, the progress of the data erasure may be outputted to the display device 128 of the server apparatus 2.

Fig. 31 is a flowchart showing a modification of the erasure process executed by the server apparatus 2 of Fig. 27. Fig. 32 is a flowchart showing a modification of the erasure process executed by the information processing apparatus 1 of Fig. 27. The process of Fig. 31 includes steps S221 to S223, instead of step S202 of Fig. 29. The process of Fig. 32 includes steps S231 to S233, instead of steps S212 to S219 of Fig. 30.

In step S201 of Fig. 31, the CPU 121 of the server apparatus 2 transmits a control signal for instructing data erasure, to the information processing apparatus 1.

In step S211 of Fig. 32, the erasure controller 14 of the information processing apparatus 1 receives the control signal for instructing data erasure, from the server apparatus 2. Then, the erasure controller 14 executes steps S231 to S233 according to the control signal. Steps S231 to S233 are similar to steps S101 to S103 of Fig. 18, except for transmitting the progress of the data erasure and the verification result to the server apparatus 2, instead of outputting them to the display device 18 of the information processing apparatus 1.

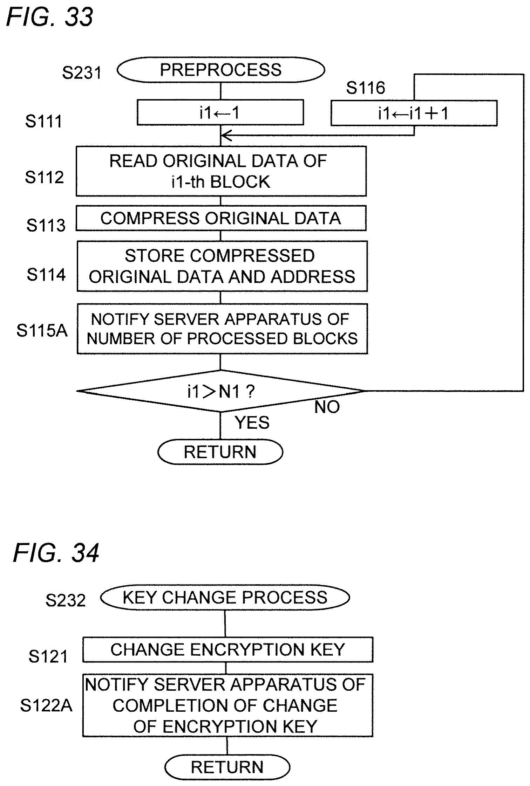

Fig. 33 is a flowchart showing a subroutine of the preprocess (step S231) of Fig. 32. The process of Fig. 33 includes step S115A, instead of step S115 of Fig. 19. In step S115A, the erasure controller 14 transmits a notification signal to the server apparatus 2, the notification signal including the number of logical blocks 31 on which steps S112 to S114 have been executed, as the progress of the data erasure.

Fig. 34 is a flowchart showing a subroutine of the key change process (step S232) of Fig. 32. The process of Fig. 34 includes step S122A, instead of step S122 of Fig. 20. In step S122A, the erasure controller 14 transmits a notification signal to the server apparatus 2, the notification signal indicating that the encryption key has been changed, as the progress of the data erasure.

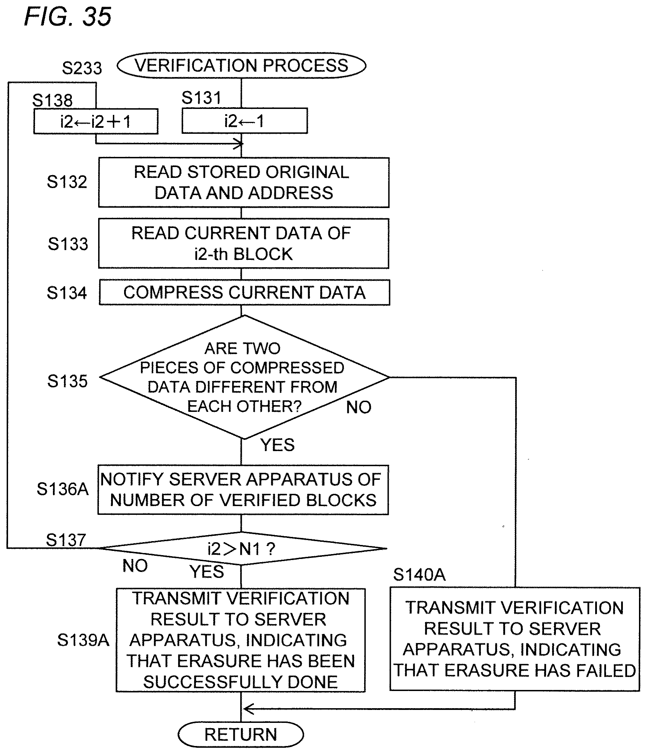

Fig. 35 is a flowchart showing a subroutine of the verification process (step S233) of Fig. 32. The process of Fig. 35 includes steps S136A, S139A, and S140A, instead of steps S136, S139, and S140 of Fig. 21. In step S136A, the erasure controller 14 transmits a notification signal to the server apparatus 2, the notification signal including the number of verified logical blocks 31, as the progress of the data erasure. In step S139A, the erasure controller 14 transmits a notification signal to the server apparatus 2, the notification signal including a verification result indicating that the data has been successfully erased. In step S140A, the erasure controller 14 transmits a notification signal to the server apparatus 2, the notification signal including a verification result indicating that the data erasure has failed.

In step S221 of Fig. 31, the CPU 121 of the server apparatus 2 receives the notification signal including the progress of the data erasure, from the information processing apparatus 1. In step S222, the CPU 121 outputs the progress of the data erasure to the display device 128 in a predetermined format, in a manner similar to that of outputting to the display device 18 of the information processing apparatus 1. In step S223, the CPU 121 determines whether or not the data erasure has been completed, that is, whether or not the notification signal indicating the verification result has been received from the information processing apparatus 1: if YES, the process proceeds to step S203; if NO, the process returns to step S221. In step S203, the CPU 121 outputs the verification result to the display device 128.

According to the process of Figs. 31 to 35, the server apparatus 2 can recognize progresses of erasure of the data stored in the storage devices 13 of the plurality of information processing apparatuses 1.

### [ADVANTAGEOUS EFFECTS AND OTHERS OF THIRD EMBODIMENT]

An information processing system 100 of the third embodiment is provided with: the information processing apparatus 1 of the first embodiment, and a server apparatus 2 connected to the information processing apparatus 1 via a communication line. The erasure controller 14 controls erasure of the data stored in the storage device 13, according to a control signal received from the server apparatus 2.

With such a configuration, it is possible to verify whether or not the data stored in the storage device 13 has been successfully erased, with a smaller load than the prior art.

According to the information processing system 100 of the third embodiment, the erasure controller 14 may transmit a first notification signal including the verification result, to the server apparatus 2. The server apparatus 2 may be provided with a display device 128 that outputs the verification result.

With such a configuration, it is possible to recognize whether or not the data stored in the storage device 13 has been successfully erased.

According to the information processing system 100 of the third embodiment, the erasure controller 14 may transmit a second notification signal including a progress of erasure of the data stored in the storage device 13, to the server apparatus 2. In this case, the display device 128 displays the progress.

With such a configuration, it is possible to recognize the progress of data erasure.

### [OTHER EMBODIMENTS]

As described above, the embodiments have been described as examples of the technology disclosed in the present application. However, the technology in the present disclosure is not limited thereto, and is applicable to embodiments with some changes, replacements, additions, omissions, and the like. In addition, new embodiments can be derived by combining the components described in the aforementioned embodiments.

Thus, other embodiments will be exemplified below.

The storage device 13 is not limited to a solid state drive, and may be a nonvolatile storage medium, such as a hard disk drive (HDD), with the self-encrypting function.

The verification result is not limited to being outputted to the display device 18, and may be outputted to an external information processing apparatus via the communication device 16.

Since important data is stored at the logical beginning of the storage area, the erasure controller 14 may always designate first 32 bytes of the storage area.

The erasure controller 14 may add a salt (predetermined keyword) to the data when calculating a hash value.

The erasure controller 14 may shrink the size of the logical block 31 to, for example, 1/10.

With reference to Figs. 18 to 26 and Figs. 31 to 35, we have described the case of displaying the progress of data erasure, while executing the erasure process according to the implementation example 2 (see Fig. 9). Alternatively, the progress of the data erasure may be similarly displayed, while executing the erasure process according to one of the implementation examples 1, 3 to 9 (see Figs. 6, 10 to 15, 17).

In a case where one hash value is calculated per a number of logical blocks 31, the progress of the data erasure may be displayed as an image or a text based on the number or ratio of unit groups of logical blocks 31, each unit group including logical blocks 31 corresponding to one hash value.

As described above, the embodiments have been described as examples of the technology according to the present disclosure. The accompanying drawings and the detailed description have been provided for this purpose.

Accordingly, the components described in the accompanying drawings and the detailed description may include not only components essential to solving the problem, but also components not essential to solving the problem, in order to exemplify the technology. Therefore, even when those non-essential components are described in the accompanying drawings and the detailed description, those non-essential components should not be considered essentials.

In addition, since the above-described embodiments are intended to exemplify the technology of the present disclosure, it is possible to make various changes, replacements, additions, omissions, and the like within the scope of claims or the equivalent thereof.

### [SUMMARY OF EMBODIMENTS]

According to a first aspect of the present disclosure, an information processing apparatus is provided with: a storage device having a self-encrypting function of data to be stored; and an erasure controller that controls erasure of data stored in the storage device. The storage device is provided with: a storage medium having a storage area; a nonvolatile memory storing an encryption key; an input/output controller. The input/output controller writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory, the erasure controller generates first sample data by compressing data read from a designated position in the storage area. The erasure controller controls the storage device to change the first encryption key stored in the nonvolatile memory to a second encryption key. In a case where the second encryption key is stored in the nonvolatile memory, the erasure controller generates second sample data by compressing data read from the designated position in the storage area. In a case where the second sample data is different from the first sample data, the erasure controller outputs a verification result indicating that the data stored in the storage device has been successfully erased. In a case where the second sample data is identical to the first sample data, the erasure controller outputs a verification result indicating that erasure of the data stored in the storage device has failed.

According to a second aspect of the present disclosure, the information processing apparatus of the first aspect is further configured as follows. The first sample data includes: first compressed data obtained by compressing first data read from a first position in in the storage area; and a first hash value calculated based on second data read from a second position in in the storage area. The second sample data includes: second compressed data obtained by compressing third data read from the first position in in the storage area; and a second hash value calculated based on fourth data read from the second position in in the storage area.

According to a second aspect of the present disclosure, the information processing apparatus of the first aspect is further configured as follows. The first sample data includes: first compressed data obtained by compressing first data read from a first position in in the storage area; and second data read from a second position in in the storage area. The second sample data includes: second compressed data obtained by compressing third data read from the first position in in the storage area; and fourth data read from the second position in in the storage area.

According to a fourth aspect of the present disclosure, the information processing apparatus of the first aspect is further configured as follows. The first sample data includes: first compressed data obtained by compressing first data read from a first position in in the storage area; a first hash value calculated based on second data read from a second position in in the storage area; and third data read from a third position in in the storage area. The second sample data includes: second compressed data obtained by compressing fourth data read from the first position in in the storage area; a second hash value calculated based on fifth data read from the second position in in the storage area; and sixth data read from the third position in in the storage area.

According to a fifth aspect of the present disclosure, the information processing apparatus of one of the first to fourth aspects is further configured as follows. In a case where a part of the second sample data is different from a corresponding part of the first sample data, the erasure controller outputs a verification result indicating that the data stored in the storage device has been successfully erased. In a case where the part of the second sample data is identical to the corresponding part of the first sample data, the erasure controller outputs a verification result indicating that erasure of the data stored in the storage device has failed.

According to a sixth aspect of the present disclosure, the information processing apparatus of one of the first to fourth aspects is further configured as follows. In a case where a file size of the second sample data is different from a file size of the first sample data, the erasure controller outputs a verification result indicating that the data stored in the storage device has been successfully erased. In a case where the file size of the second sample data is identical to the file size of the first sample data, the erasure controller outputs a verification result indicating that erasure of the data stored in the storage device has failed.

According to a seventh aspect of the present disclosure, the information processing apparatus of one of the first to sixth aspects is further configured as follows. The erasure controller encrypts the first sample data, and stores the encrypted first sample data in an external storage device located external to the information processing apparatus.

According to an eighth aspect of the present disclosure, the information processing apparatus of one of the first to seventh aspects is further configured as follows. The storage area includes a plurality of blocks. Per predetermined number of blocks, the first sample data and the second sample data are calculated based on data stored in the predetermined number of blocks.

According to a ninth aspect of the present disclosure, the information processing apparatus of one of the first to eighth aspects is further configured as follows. The storage area includes a plurality of partial areas logically divided from the storage area, each of the partial areas including a plurality of logically sequential blocks. For each of the partial areas, the erasure controller designates a number of blocks with a ratio to the blocks included in the partial area, the ratio being different for the partial area. The first sample data and the second sample data are calculated based on data stored in the designated blocks.

According to a tenth aspect of the present disclosure, the information processing apparatus of one of the first to ninth aspects is further configured as follows. The storage area includes a plurality of blocks. The first sample data and the second sample data are calculated based on data stored in a plurality of blocks logically cent to each other.

According to an eleventh aspect of the present disclosure, the information processing apparatus of one of the first to tenth aspects is further configured as follows. The information processing apparatus is provided with a first display device that outputs the verification result.

According to a twelfth aspect of the present disclosure, the information processing apparatus of the eleventh aspect is further configured as follows. The erasure controller outputs a progress of erasure of the data stored in the storage device, to the first display device.

According to a thirteenth aspect of the present disclosure, an information processing apparatus is provided with: a storage device having a self-encrypting function of data to be stored; and an erasure controller that controls erasure of data stored in the storage device. The storage device is provided with: a storage medium having a storage area; a nonvolatile memory storing an encryption key; an input/output controller. The input/output controller writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory, the erasure controller compresses first data read from a designated position in the storage area. The erasure controller controls the storage device to change the first encryption key stored in the nonvolatile memory to a second encryption key. In a case where the second encryption key is stored in the nonvolatile memory, the erasure controller compresses second data read from the designated position in the storage area. In a case where the second data is different from the first data, the erasure controller outputs a verification result indicating that the data stored in the storage device has been successfully erased. In a case where the second data is identical to the first data, the erasure controller outputs a verification result indicating that erasure of the data stored in the storage device has failed.

According to a fourteenth aspect of the present disclosure, an information processing apparatus is provided with: a storage device having a self-encrypting function of data to be stored; and an erasure controller that controls erasure of data stored in the storage device. The storage device is provided with: a storage medium having a storage area; a nonvolatile memory storing an encryption key; an input/output controller. The input/output controller writes input data to the storage area, outputs the data read from the storage area, encrypts at least a part of the data to be written to the storage area using the encryption key, and decrypts at least a part of the data read from the storage area using the encryption key. In a case where a first encryption key is stored in the nonvolatile memory, the erasure controller generates first sample data including a first hash value calculated based on first data read from a first position in in the storage area, and second data read from a second position in in the storage area. The erasure controller controls the storage device to change the first encryption key stored in the nonvolatile memory to a second encryption key. In a case where the second encryption key is stored in the nonvolatile memory, the erasure controller generates second sample data including a second hash value calculated based on third data read from the first position in in the storage area, and fourth data read from the second position in in the storage area. In a case where the second sample data is different from the first sample data, the erasure controller outputs a verification result indicating that the data stored in the storage device has been successfully erased. In a case where the second sample data is identical to the first sample data, the erasure controller outputs a verification result indicating that erasure of the data stored in the storage device has failed.

According to a fifteenth aspect of the present disclosure, an information processing system is provided with: the information processing apparatus of one of the first to fourteenth aspects, and a server apparatus connected to the information processing apparatus via a communication line. The erasure controller controls erasure of the data stored in the storage device, according to a control signal received from the server apparatus.

According to a sixteenth aspect of the present disclosure, the information processing system of the fifteenth aspect is further configured as follows. The erasure controller transmits a first notification signal including the verification result, to the server apparatus. The server apparatus is provided with a second display device that outputs the verification result.

According to a seventeenth aspect of the present disclosure, the information processing system of the sixteenth aspect is further configured as follows. The erasure controller transmits a second notification signal including a progress of erasure of the data stored in the storage device, to the server apparatus. The second display device displays the progress.

According to an eighteenth aspect of the present disclosure, an information processing method controls erasure of data stored in a storage device having a self-encrypting function. The storage device is provided with: a storage medium having a storage area; a nonvolatile memory storing an encryption key; and an input/output controller. The input/output controller writes input data to the storage area, outputs the data read from the storage area, encrypts at least a part of the data to be written to the storage area using the encryption key, and decrypts at least a part of the data read from the storage area using the encryption key. The information processing method includes, in a case where a first encryption key is stored in the nonvolatile memory, generating first sample data by compressing data read from a designated position in the storage area. The information processing method includes controlling the storage device to change the first encryption key stored in the nonvolatile memory to a second encryption key. The information processing method includes, in a case where the second encryption key is stored in the nonvolatile memory, generating second sample data by compressing data read from the designated position in the storage area. The information processing method includes, in a case where the second sample data is different from the first sample data, outputting a verification result indicating that the data stored in the storage device has been successfully erased. The information processing method includes, in a case where the second sample data is identical to the first sample data, outputting a verification result indicating that erasure of the data stored in the storage device has failed.

According to a nineteenth aspect of the present disclosure, a program includes instructions executed by a processor implemented in an information processing apparatus. The information processing apparatus is further provided with a storage device having a self-encrypting function of stored data. The storage device is provided with: a storage medium having a storage area, a nonvolatile memory storing an encryption key, and an input/output controller. The input/output controller writes input data to the storage area, outputs the data read from the storage area, encrypts at least a part of the data to be written to the storage area using the encryption key, and decrypts at least a part of the data read from the storage area using the encryption key. The instructions cause the processor to execute, in a case where a first encryption key is stored in the nonvolatile memory, generate first sample data by compressing data read from a designated position in the storage area. The instructions cause the processor to execute control the storage device to change the first encryption key stored in the nonvolatile memory to a second encryption key. The instructions cause the processor to execute, in a case where the second encryption key is stored in the nonvolatile memory, generate second sample data by compressing data read from the designated position in the storage area. The instructions cause the processor to execute, in a case where the second sample data is different from the first sample data, output a verification result indicating that the data stored in the storage device has been successfully erased. The instructions cause the processor to execute, in a case where the second sample data is identical to the first sample data, output a verification result indicating that erasure of the data stored in the storage device has failed.

### INDUSTRIAL APPLICABILITY

An information processing apparatus according to an aspect of the present disclosure is useful for verifying whether or not data stored in a storage device having the self-encrypting function has been successfully erased.

### REFERENCE SIGNS LIST

1, 1A: information processing apparatus
10: bus
11: central processing unit (CPU)
12: random access memory (RAM)
13: storage device
14: erasure controller
15: nonvolatile (NV) memory
16: communication (COMM.) device
17: input device
18: display device
19: device interface (I/F)
21: input/output (I/O) controller
22: random access memory (RAM)
23: nonvolatile memory
24: flash memory
31: logical block
41: external storage device
100: information processing system
120: bus
121: central processing unit (CPU)
122: random access memory (RAM)
123: storage device
126: communication (COMM.) device
127: input device
128: display device

## Claims

1. An information processing apparatus comprising:
a storage device having a self-encrypting function of data to be stored; and
an erasure controller that controls erasure of data stored in the storage device,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key,
wherein, in a case where a first encryption key is stored in the nonvolatile memory, the erasure controller generates first sample data by compressing data read from a designated position in the storage area,
wherein the erasure controller controls the storage device to change the first encryption key stored in the nonvolatile memory to a second encryption key,
wherein, in a case where the second encryption key is stored in the nonvolatile memory, the erasure controller generates second sample data by compressing data read from the designated position in the storage area,
wherein, in a case where the second sample data is different from the first sample data, the erasure controller outputs a verification result indicating that the data stored in the storage device has been successfully erased, and
wherein, in a case where the second sample data is identical to the first sample data, the erasure controller outputs a verification result indicating that erasure of the data stored in the storage device has failed.

2. The information processing apparatus as claimed in claim 1,
wherein the first sample data includes:
first compressed data obtained by compressing first data read from a first position in in the storage area; and
a first hash value calculated based on second data read from a second position in in the storage area, and
wherein the second sample data includes:
second compressed data obtained by compressing third data read from the first position in in the storage area; and
a second hash value calculated based on fourth data read from the second position in in the storage area.

3. The information processing apparatus as claimed in claim 1,
wherein the first sample data includes:
first compressed data obtained by compressing first data read from a first position in in the storage area; and
second data read from a second position in in the storage area, and
wherein the second sample data includes:
second compressed data obtained by compressing third data read from the first position in in the storage area; and
fourth data read from the second position in in the storage area.

4. The information processing apparatus as claimed in claim 1,
wherein the first sample data includes:
first compressed data obtained by compressing first data read from a first position in in the storage area;
a first hash value calculated based on second data read from a second position in in the storage area; and
third data read from a third position in in the storage area, and
wherein the second sample data includes:
second compressed data obtained by compressing fourth data read from the first position in in the storage area;
a second hash value calculated based on fifth data read from the second position in in the storage area; and
sixth data read from the third position in in the storage area.

5. The information processing apparatus as claimed in any one of claims 1 to 4,
wherein, in a case where a part of the second sample data is different from a corresponding part of the first sample data, the erasure controller outputs a verification result indicating that the data stored in the storage device has been successfully erased, and
wherein, in a case where the part of the second sample data is identical to the corresponding part of the first sample data, the erasure controller outputs a verification result indicating that erasure of the data stored in the storage device has failed.

6. The information processing apparatus as claimed in any one of claims 1 to 4,
wherein, in a case where a file size of the second sample data is different from a file size of the first sample data, the erasure controller outputs a verification result indicating that the data stored in the storage device has been successfully erased, and
wherein, in a case where the file size of the second sample data is identical to the file size of the first sample data, the erasure controller outputs a verification result indicating that erasure of the data stored in the storage device has failed.

7. The information processing apparatus as claimed in any one of claims 1 to 4,
wherein the erasure controller encrypts the first sample data, and stores the encrypted first sample data in an external storage device located external to the information processing apparatus.

8. The information processing apparatus as claimed in any one of claims 1 to 4,
wherein the storage area includes a plurality of blocks, and
wherein, per predetermined number of blocks, the first sample data and the second sample data are calculated based on data stored in the predetermined number of blocks.

9. The information processing apparatus as claimed in any one of claims 1 to 4,
wherein the storage area includes a plurality of partial areas logically divided from the storage area, each of the partial areas including a plurality of logically sequential blocks,
wherein, for each of the partial areas, the erasure controller designates a number of blocks with a ratio to the blocks included in the partial area, the ratio being different for the partial area, and
wherein the first sample data and the second sample data are calculated based on data stored in the designated blocks.

10. The information processing apparatus as claimed in any one of claims 1 to 4,
wherein the storage area includes a plurality of blocks, and
wherein the first sample data and the second sample data are calculated based on data stored in a plurality of blocks logically adjacent to each other.

11. The information processing apparatus as claimed in any one of claims 1 to 4, comprising:
a first display device that outputs the verification result.

12. The information processing apparatus as claimed in claim 11,
wherein the erasure controller outputs a progress of erasure of the data stored in the storage device, to the first display device.

13. An information processing apparatus comprising:
a storage device having a self-encrypting function of data to be stored; and
an erasure controller that controls erasure of data stored in the storage device,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key,
wherein, in a case where a first encryption key is stored in the nonvolatile memory, the erasure controller compresses first data read from a designated position in the storage area,
wherein the erasure controller controls the storage device to change the first encryption key stored in the nonvolatile memory to a second encryption key,
wherein, in a case where the second encryption key is stored in the nonvolatile memory, the erasure controller compresses second data read from the designated position in the storage area,
wherein, in a case where the second data is different from the first data, the erasure controller outputs a verification result indicating that the data stored in the storage device has been successfully erased, and
wherein, in a case where the second data is identical to the first data, the erasure controller outputs a verification result indicating that erasure of the data stored in the storage device has failed.

14. An information processing apparatus comprising:
a storage device having a self-encrypting function of data to be stored; and
an erasure controller that controls erasure of data stored in the storage device,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key,
wherein, in a case where a first encryption key is stored in the nonvolatile memory, the erasure controller generates first sample data including a first hash value calculated based on first data read from a first position in in the storage area, and second data read from a second position in in the storage area,
wherein the erasure controller controls the storage device to change the first encryption key stored in the nonvolatile memory to a second encryption key,
wherein, in a case where the second encryption key is stored in the nonvolatile memory, the erasure controller generates second sample data including a second hash value calculated based on third data read from the first position in in the storage area, and fourth data read from the second position in in the storage area,
wherein, in a case where the second sample data is different from the first sample data, the erasure controller outputs a verification result indicating that the data stored in the storage device has been successfully erased, and
wherein, in a case where the second sample data is identical to the first sample data, the erasure controller outputs a verification result indicating that erasure of the data stored in the storage device has failed.

15. An information processing system comprising:
the information processing apparatus as claimed in claim 1; and
a server apparatus connected to the information processing apparatus via a communication line,
wherein the erasure controller controls erasure of the data stored in the storage device, according to a control signal received from the server apparatus.

16. The information processing system as claimed in claim 15,
wherein the erasure controller transmits a first notification signal including the verification result, to the server apparatus, and
wherein the server apparatus comprises a second display device that outputs the verification result.

17. The information processing system as claimed in claim 16,
wherein the erasure controller transmits a second notification signal including a progress of erasure of the data stored in the storage device, to the server apparatus, and
wherein the second display device displays the progress.

18. An information processing method of controlling erasure of data stored in a storage device having a self-encrypting function,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key, and
wherein the information processing method includes steps of:
in a case where a first encryption key is stored in the nonvolatile memory, generating first sample data by compressing data read from a designated position in the storage area,
controlling the storage device to change the first encryption key stored in the nonvolatile memory to a second encryption key,
in a case where the second encryption key is stored in the nonvolatile memory, generating second sample data by compressing data read from the designated position in the storage area,
in a case where the second sample data is different from the first sample data, outputting a verification result indicating that the data stored in the storage device has been successfully erased, and
in a case where the second sample data is identical to the first sample data, outputting a verification result indicating that erasure of the data stored in the storage device has failed.

19. A program including instructions executed by a processor implemented in an information processing apparatus,
wherein the information processing apparatus further comprises a storage device having a self-encrypting function of stored data,
wherein the storage device comprises:
a storage medium having a storage area;
a nonvolatile memory storing an encryption key; and
an input/output controller that writes input data to the storage area, outputs the data read from the storage area, encrypts at least a part of the data to be written to the storage area using the encryption key, and decrypts at least a part of the data read from the storage area using the encryption key,
wherein the instructions cause the processor to execute:
in a case where a first encryption key is stored in the nonvolatile memory, generate first sample data by compressing data read from a designated position in the storage area,
control the storage device to change the first encryption key stored in the nonvolatile memory to a second encryption key,
in a case where the second encryption key is stored in the nonvolatile memory, generate second sample data by compressing data read from the designated position in the storage area,
in a case where the second sample data is different from the first sample data, output a verification result indicating that the data stored in the storage device has been successfully erased, and
in a case where the second sample data is identical to the first sample data, output a verification result indicating that erasure of the data stored in the storage device has failed.

## Amended claims

### Amended claims under Art. 19.1 PCT

1. An information processing apparatus comprising:
a storage device having a self-encrypting function of data to be stored; and
an erasure controller that controls erasure of data stored in the storage device,
wherein the storage device comprises:
a storage medium having a storage area;
a nonvolatile memory storing an encryption key; and
an input/output controller that encrypts at least a part of the data to be written to the storage area using the encryption key, writes the encrypted data to the storage area, decrypts at least a part of the data read from the storage area using the encryption key, and outputs the decrypted data,
wherein the nonvolatile memory stores a first encryption key before change, wherein, the erasure controller generates first sample data by compressing data read from a designated position in the storage area and decrypted using the first encryption key, before controlling the storage device to change the first encryption key to a second encryption key,
wherein the erasure controller controls the storage device to change the first encryption key stored in the nonvolatile memory to the second encryption key,
wherein, the erasure controller generates second sample data by compressing data read from the designated position in the storage area and decrypted using the second encryption key, after changing the first encryption key to the second encryption key,
wherein, in a case where the second sample data is different from the first sample data, the erasure controller outputs a verification result indicating that the data stored in the storage device has been successfully erased, and
wherein, in a case where the second sample data is identical to the first sample data, the erasure controller outputs a verification result indicating that erasure of the data stored in the storage device has failed.

2. The information processing apparatus as claimed in claim 1,
wherein the first sample data includes:
first compressed data obtained by compressing first data read from a first position in in the storage area and decrypted using the first encryption key; and
a first hash value calculated based on second data read from a second position in in the storage area and decrypted using the first encryption key, and
wherein the second sample data includes:
second compressed data obtained by compressing third data read from the first position in in the storage area and decrypted using the second encryption key; and
a second hash value calculated based on fourth data read from the second position in in the storage area and decrypted using the second encryption key.

3. The information processing apparatus as claimed in claim 1,
wherein the first sample data includes:
first compressed data obtained by compressing first data read from a first position in in the storage area and decrypted using the first encryption key; and
second data read from a second position in in the storage area and decrypted using the first encryption key, and
wherein the second sample data includes:
second compressed data obtained by compressing third data read from the first position in in the storage area and decrypted using the second encryption key; and
fourth data read from the second position in in the storage area and decrypted using the second encryption key.

4. The information processing apparatus as claimed in claim 1,
wherein the first sample data includes:
first compressed data obtained by compressing first data read from a first position in in the storage area and decrypted using the first encryption key;
a first hash value calculated based on second data read from a second position in in the storage area and decrypted using the first encryption key; and
third data read from a third position in in the storage area and decrypted using the first encryption key, and
wherein the second sample data includes:
second compressed data obtained by compressing fourth data read from the first position in in the storage area and decrypted using the second encryption key;
a second hash value calculated based on fifth data read from the second position in in the storage area and decrypted using the second encryption key; and
sixth data read from the third position in in the storage area and decrypted using the second encryption key.

5. The information processing apparatus as claimed in any one of claims 1 to 4,
wherein, in a case where a part of the second sample data is different from a corresponding part of the first sample data, the erasure controller outputs a verification result indicating that the data stored in the storage device has been successfully erased, and
wherein, in a case where the part of the second sample data is identical to the corresponding part of the first sample data, the erasure controller outputs a verification result indicating that erasure of the data stored in the storage device has failed.

6. The information processing apparatus as claimed in any one of claims 1 to 4,
wherein, in a case where a file size of the second sample data is different from a file size of the first sample data, the erasure controller outputs a verification result indicating that the data stored in the storage device has been successfully erased, and
wherein, in a case where the file size of the second sample data is identical to the file size of the first sample data, the erasure controller outputs a verification result indicating that erasure of the data stored in the storage device has failed.

7. The information processing apparatus as claimed in any one of claims 1 to 4,
wherein the erasure controller encrypts the first sample data, and stores the encrypted first sample data in an external storage device located external to the information processing apparatus.

8. The information processing apparatus as claimed in any one of claims 1 to 4, wherein the storage area includes a plurality of blocks, and
wherein, per predetermined number of blocks, the first sample data and the second sample data are calculated based on data stored in the predetermined number of blocks.

9. The information processing apparatus as claimed in any one of claims 1 to 4,
wherein the storage area includes a plurality of partial areas logically divided from the storage area, each of the partial areas including a plurality of logically sequential blocks,
wherein, for each of the partial areas, the erasure controller designates a number of blocks with a ratio to the blocks included in the partial area, the ratio being different for the partial area, and
wherein the first sample data and the second sample data are calculated based on data stored in the designated blocks.

10. The information processing apparatus as claimed in any one of claims 1 to 4,
wherein the storage area includes a plurality of blocks, and
wherein the first sample data and the second sample data are calculated based on data stored in a plurality of blocks logically adjacent to each other.

11. The information processing apparatus as claimed in any one of claims 1 to 4, comprising:
a first display device that outputs the verification result.

12. The information processing apparatus as claimed in claim 11,
wherein the erasure controller outputs a progress of erasure of the data stored in the storage device, to the first display device.

13. An information processing apparatus comprising:
a storage device having a self-encrypting function of data to be stored; and
an erasure controller that controls erasure of data stored in the storage device,
wherein the storage device comprises:
a storage medium having a storage area;
a nonvolatile memory storing an encryption key; and
an input/output controller that encrypts at least a part of the data to be written to the storage area using the encryption key, writes the encrypted data to the storage area, decrypts at least a part of the data read from the storage area using the encryption key, and outputs the decrypted data,
wherein the nonvolatile memory stores a first encryption key before change,
wherein, the erasure controller compresses first data read from a designated position in the storage area and decrypted using the first encryption key, before controlling the storage device to change the first encryption key to a second encryption key,
wherein the erasure controller controls the storage device to change the first encryption key stored in the nonvolatile memory to a second encryption key,
wherein, the erasure controller compresses second data read from the designated position in the storage area and decrypted using the second encryption key, after changing the first encryption key to the second encryption key,
wherein the erasure controller decompresses the compressed first data,
wherein, in a case where the second data is different from the first data, the erasure controller outputs a verification result indicating that the data stored in the storage device has been successfully erased, and
wherein, in a case where the second data is identical to the first data, the erasure controller outputs a verification result indicating that erasure of the data stored in the storage device has failed.

14. An information processing apparatus comprising:
a storage device having a self-encrypting function of data to be stored; and
an erasure controller that controls erasure of data stored in the storage device,
wherein the storage device comprises:
a storage medium having a storage area;
a nonvolatile memory storing an encryption key; and
an input/output controller that encrypts at least a part of the data to be written to the storage area using the encryption key, writes the encrypted data to the storage area, decrypts at least a part of the data read from the storage area using the encryption key, and outputs the decrypted data,
wherein the nonvolatile memory stores a first encryption key before change,
wherein, the erasure controller generates first sample data including a first hash value calculated based on first data read from a first position in in the storage area and decrypted using the first encryption key, and second data read from a second position in in the storage area and decrypted using the first encryption key, before controlling the storage device to change the first encryption key to a second encryption key,
wherein the erasure controller controls the storage device to change the first encryption key stored in the nonvolatile memory to a second encryption key,
wherein, the erasure controller generates second sample data including a second hash value calculated based on third data read from the first position in in the storage area and decrypted using the second encryption key, and fourth data read from the second position in in the storage area and decrypted using the second encryption key, after changing the first encryption key to the second encryption key,
wherein, in a case where the second sample data is different from the first sample data, the erasure controller outputs a verification result indicating that the data stored in the storage device has been successfully erased, and
wherein, in a case where the second sample data is identical to the first sample data, the erasure controller outputs a verification result indicating that erasure of the data stored in the storage device has failed.

15. An information processing system comprising:
the information processing apparatus as claimed in claim 1; and
a server apparatus connected to the information processing apparatus via a communication line,
wherein the erasure controller controls erasure of the data stored in the storage device, according to a control signal received from the server apparatus.

16. The information processing system as claimed in claim 15,
wherein the erasure controller transmits a first notification signal including the verification result, to the server apparatus, and
wherein the server apparatus comprises a second display device that outputs the verification result.

17. The information processing system as claimed in claim 16,
wherein the erasure controller transmits a second notification signal including a progress of erasure of the data stored in the storage device, to the server apparatus, and
wherein the second display device displays the progress.

18. An information processing method of controlling erasure of data stored in a storage device having a self-encrypting function,
wherein the storage device comprises:
a storage medium having a storage area;
a nonvolatile memory storing an encryption key; and
an input/output controller that encrypts at least a part of the data to be written to the storage area using the encryption key, writes the encrypted data to the storage area, decrypts at least a part of the data read from the storage area using the encryption key, and outputs the decrypted data,
wherein the nonvolatile memory stores a first encryption key before change, and
wherein the information processing method includes steps of:
generating first sample data by compressing data read from a designated position in the storage area and decrypted using the first encryption key, before controlling the storage device to change the first encryption key to a second encryption key,
controlling the storage device to change the first encryption key stored in the nonvolatile memory to a second encryption key,
generating second sample data by compressing data read from the designated position in the storage area and decrypted using the second encryption key, after changing the first encryption key to the second encryption key,
in a case where the second sample data is different from the first sample data, outputting a verification result indicating that the data stored in the storage device has been successfully erased, and
in a case where the second sample data is identical to the first sample data, outputting a verification result indicating that erasure of the data stored in the storage device has failed.

19. A program including instructions executed by a processor implemented in an information processing apparatus,
wherein the information processing apparatus further comprises a storage device having a self-encrypting function of stored data,
wherein the storage device comprises:
a storage medium having a storage area;
a nonvolatile memory storing an encryption key; and
an input/output controller that encrypts at least a part of the data to be written to the storage area using the encryption key, writes the encrypted data to the storage area, decrypts at least a part of the data read from the storage area using the encryption key, and outputs the decrypted data,
wherein the nonvolatile memory stores a first encryption key before change,
wherein the instructions cause the processor to execute:
generate first sample data by compressing data read from a designated position in the storage area and decrypted using the first encryption key, before controlling the storage device to change the first encryption key to a second encryption key,
control the storage device to change the first encryption key stored in the nonvolatile memory to a second encryption key,
generate second sample data by compressing data read from the designated position in the storage area and decrypted using the second encryption key, after changing the first encryption key to the second encryption key,
in a case where the second sample data is different from the first sample data, output a verification result indicating that the data stored in the storage device has been successfully erased, and
in a case where the second sample data is identical to the first sample data, output a verification result indicating that erasure of the data stored in the storage device has failed.

Statement under Art. 19.1 PCT
Claims 1 to 4, 13, 14, 18, and 19 are amended to clarify use of the encryption key, based on paragraphs 0034, 0036, and others. In addition, claim 13 is amended to add data decompression, based on paragraph 0054 and others.

The inventions of claims 1, 13, 14, 18, and 19 are **characterized by** comparing data read from the storage area before changing the encryption key, with data read from the storage area after changing the encryption key. In particular, the inventions of claims 1, 18, and 19 are **characterized by** comparing data read from the storage area before changing the encryption key and compressed, with data read from the storage area after changing the encryption key and compressed.

D1 discloses comparing a known data pattern with a data pattern read from a memory 12. D1 does not disclose comparing data read from the storage area before changing the encryption key, with data read from the storage area after changing the encryption key. Further, although D1 mention "compression" in paragraph 0073, it is intended to mean compression functionality for compressing data to be written to the memory 12 or decompressing data read from the memory 12. The "compression" of D1 is different from the "compression" of the present application. D1 does not disclose comparing data read from the storage area before changing the encryption key and compressed, with data read from the storage area after changing the encryption key and compressed.

D2 also does not disclose the characterizing features of the inventions of the present application.

Therefore, the inventions of claims 1, 13, 14, 18, and 19 are novel and inventive over D1 and D2, and the inventions of the other claims depending on claims 1, 13, 14, 18, and 19 are also novel and inventive over D1 and D2.
